# EUROPÄISCHE PATENTSCHRIFT

(11) **EP 1 344 087 B1**
(45) Veröffentlichungstag und Bekanntmachung des Hinweises auf die Patenterteilung: **19.07.2006**
(21) Anmeldenummer: 00983334.4
(22) Anmeldetag: 14.12.2000
(51) Int. Cl.: G01S 15/10, G01S 7/527

(54) **ADAPTIVE KOMPARATORSCHALTUNG UND AKUSTISCHER ENTFERNUNGSSENSOR MIT EINER DERARTIGEN SCHALTUNG**
ADAPTIVE COMPARATOR CIRCUIT AND ACOUSTIC DISTANCE SENSOR COMPRISING SAID CIRCUIT
MONTAGE COMPARATEUR ADAPTATIF ET CAPTEUR DE DISTANCE ACOUSTIQUE COMPORTANT UN TEL CIRCUIT

(43) Veröffentlichungstag der Anmeldung: 17.09.2003
(73) Patentinhaber: Pepperl + Fuchs GmbH, 68307 Mannheim (DE)
(72) Erfinder: KNITTEL, Thomas, 67165 Waldsee (DE)
(74) Vertreter: Mierswa, Klaus
(86) Internationale Anmeldenummer: PCT/EP2000/012758
(87) Internationale Veröffentlichungsnummer: WO 2002/048737

(56) Entgegenhaltungen:
- EP-A- 0 265 634
- DE-A- 3 713 758
- US-A- 4 785 664
- US-A- 4 975 889
- PATENT ABSTRACTS OF JAPAN vol. 004, no. 118 (P-024), 22. August 1980 (1980-08-22) -& JP 55 072880 A (NEC CORP), 2. Juni 1980 (1980-06-02)

## Beschreibung

### Technisches Gebiet:

Die Erfindung betrifft eine adaptive Komparatorschaltung, welche insbesondere zur Verkleinerung des Nahbereiches eines akustischen Entfernungssensors einsetzbar ist, sowie einen akustischen Entfernungssensor mit einer derartigen Schaltung.

### Stand der Technik:

Akustische Entfernungssensoren werden eingesetzt, um Abstände nach dem Impuls-Laufzeit-Verfahren zu messen. Hierbei sendet ein Schallwandler einen kurzen Schallimpuls aus, der sich in einem Medium (Gas, Flüssigkeit oder Festkörper) ausbreitet. Dieser Impuls wird z.B. an einem Objekt reflektiert und kommt als Echo zurück. Der Abstand zum Objekt läßt sich aus der Laufzeit des Schallimpulses und der Schallgeschwindigkeit im Medium ermitteln.

In der Regel liegt die Frequenz des für derartige Messungen verwendeten Schalles im Ultraschallbereich, typischerweise im Bereich zwischen 20 kHz und 500 kHz, z.B. bei 400 kHz. Der Schallwandler, der insbesondere z.B. eine Piezokeramik sein kann, wird meist sowohl zum Senden des Schallimpulses als auch zum Empfang des Echos benutzt. Typischerweise werden Schallimpulse von jeweils ca. 3 bis 50 Schwingungsperioden ausgesandt. Daraus ergeben sich für die abgestrahlten Schallimpulse Zeitdauern von typischerweise ca. 6...2050 µs. Während dieser Zeit, Sendephase, schwingt der Schallwandler mit großer Schwingungsamplitude. Nach dieser Zeitdauer folgt eine Relaxationszeit, in der die Schwingungsamplitude - meist exponentiell - abklingt. Die Relaxationszeit beträgt typischerweise z.B. 300 µs bis 3 ms.

Die Zeitspanne zwischen dem Ende der Relaxationszeit und dem Abstrahlen des nächsten Schallimpulses wird im folgenden "Ruhephase" genannt. Aufgrund von Rauschen und anderen Störeinflüssen sinkt die Schwingungsamplitude jedoch auch während der Ruhephase nicht vollständig auf Null ab, sondern verbleibt auf einem bestimmten konstanten mittleren Störpegel. Die während der Relaxationszeit abklingende Schwingungsamplitude und der mittlere Störpegel bilden daher während der sich an die Sendephase anschließenden Empfangsphase auch bei Abwesenheit eines Nutzechos stets ein endliches Hintergrundsignal, welches unmittelbar nach Ende der Sendephase sehr groß ist, innerhalb der Relaxationszeit in der Regel exponentiell abfällt und schließlich auf dem Störpegel verbleibt.

Ein Nutzechosignal überlagert sich diesem Hintergrund und wird in der Regel mit Hilfe eines Komparators registriert, welcher ein Schaltsignal abgibt, wenn das Empfangssignal größer ist als ein bestimmter Referenzwert, der im Folgenden als "Schwellenspannung" bezeichnet wird. Die Schwellenspannung soll einerseits so niedrig wie möglich liegen, damit auch schwache Nutzechosignale, z.B. von kleinen Objekten, registriert werden können, was hohe Empfindlichkeit bedeutet. Andererseits muß die Schwellenspanilung mit einem gewissen Sicherheitsabstand über dem Störpegel liegen, um Fehlauslösungen des Komparators während der Ruhephase zu vermeiden.

Bei zeitlich konstanter Schwellenspannung sind Nutzechosignale registrierbar, sobald das Hintergrundsignal aufgrund der Relaxation des Schallwandlers unter die Schwellenspannung abgesunken ist. Vor diesem Zeitpunkt jedoch, d.h. während der Sendephase und eines Teils der Relaxationszeit, ist das Hintergrundsignal größer als die Schwellenspannung, so daß der Komparator - unabhängig von der Anwesenheit eines Echos - während dieser Zeit in jedem Fall ausgelöst ist. Somit ist das System während dieser Zeit, Totzeit genannt, grundsätzlich unempfindlich für den Empfang von Echos. Daher ist die Messung von Abständen unterhalb eines bestimmten Mindestabstandes unmöglich. Dieser Mindestabstand wird "Nahbereich" genannt und beträgt typischerweise einige cm. Die Existenz des Nahbereiches wirkt oft nachteilig aus, z.B. überall dort, wo der Sensor aus Platzgründen möglichst nahe an einem zu detektierenden Objekt angeordnet sein soll.

Es sind unterschiedliche Methoden zur Verkleinerung des Nahbereiches bekannt. Die einfachste Methode besteht darin, die Schwellenspannung zu vergrößern. Dadurch wird erreicht, daß das nach der Sendephase abklingende Hintergrundsignal innerhalb der Relaxationszeit zu einem früheren Zeitpunkt unter die Schwellenspannung abfällt. Diese Methode ist jedoch mit dem gravierenden Nachteil verbunden, daß eine Erhöhung der Schwellenspannung gleichbedeutend ist mit einer Verringerung der Systemempfindlichkeit, so daß schwache Echos nicht mehr registriert werden.

Eine andere Methode besteht darin, das Empfangssignal durch einen Verstärker zu führen, dessen Verstärkungsfaktor zeitlich veränderlich ist. Der Verstärkungsfaktor ist unmittelbar nach dem Sendepuls minimal und wird dann z.B. mit Hilfe einer geeigneten elektronischen Schaltung abhängig von der Zeit erhöht. Auf diese Weise läßt sich trotz einer zeitlich konstanten Schwellenspannung eine Verkürzung des Nahbereiches mit einer hohen Empfindlichkeit während der Ruhephase kombinieren. Allerdings muß hierzu der zeitliche Verlauf des Verstärkungsfaktors an die Relaxationszeit angepaßt sein. Nachteilig ist, daß eine einmalige optimale Anpassung hierbei nicht ausreicht, da die Relaxationszeit des Schallwandlers nicht konstant ist, sondern vom Medium, von der Temperatur, vom Alter des Schallwandlers und anderen Einflüssen abhängt. In der Praxis müssen daher entweder aufwendige Kompensationsmaßnahmen getroffen oder ständige Neuanpassungen vorgenommen werden, oder es muß von vornherein eine große Sicherheitsreserve zur optimalen Anpassung eingehalten werden, was die Systemempfindlichkeit zumindest während der Relaxationszeit verringert.

Eine weitere Methode besteht darin, eine zeitlich veränderliche Schwellenspannung bereitzustellen. Diese fällt hierbei idealerweise mit einer ähnlichen Steigung ab wie das abklingende Hintergrundsignal und geht zu Beginn der Ruhephase zu einem konstanten Wert über, wobei die Schwellenspannung jedoch immer hinreichend größer bleibt als das Hintergrundsignal. Eine zusätzliche Verbesserung dieser Methode läßt sich erreichen, indem das Hintergrundsignal einer logarithmischen Verstärkung unterzogen wird, so daß anstelle des exponentiellen ein linearer Rückgang erfolgt. Nachteilig ist jedoch auch hier, daß eine einmalige Anpassung des zeitlichen Verhaltens der Schwellenspannung hierbei nicht ausreicht, um auf Dauer einen optimalen Betrieb zu gewährleisten, da auch hier das individuelle Abklingverhalten des Schallwandlers nicht einzelfallbedingt berücksichtigt wird.

Aus der DE 37 13 758 A1 ist eine Empfängerschaltung für ein akustisches Distanzmeßgerät bekannt, welches nach dem Impuls-Echo-Laufzeitverfahren arbeitet und sowohl eine zeitlich veränderliche Verstärkung als auch eine zeitlich veränderliche Schwellenspannung verwendet. Das Echosignal durchläuft mehrere in Serie geschaltete Verstärkerstufen, wobei mindestens eine derselben eine annähernd logarithmische Charakteristik aufweist. Diese Verstärkerstufe ist als Operationsverstärker ausgebildet und mit einer Gegenkopplung beschaltet, welche ein Bauteil mit nichtlinearer Spannungs-/Stromkennlinie enthält. Das Echosignal wird nach Durchlaufen der Verstärkerstufen demoduliert und dem Signaleingang eines Komparators zugeführt. Dieses Spannungssignal ist ferner über eine Serienschaltung aus einem ersten Widerstand und einem Kondensator an Masse gelegt. Hierbei ist derjenige Anschluß des Kondensators, welcher mit dem ersten Widerstand verbunden ist, über einen zweiten Widerstand mit dem Referenzeingang des Komparators verbunden. Der genannte Anschluß des Kondensators ist ferner über einen dritten Widerstand mit einer Spannungsquelle verbunden.

Der Druckschrift D4 (=US-A-4,785,664) ist ein Ultraschallsystem zur Detektion des Flüssigkeitsstand einer Flüssigkeit in einem Tank zu entnehmen, wobei das System die Fähigkeit besitzt, Flüssigkeitsstände insbesondere dann festzustellen, wenn der Tank fast voll ist. Ein aus einem Ultraschallwandler herrührendes Ultraschallsignal wird von der Oberfläche im Tank reflektiert. Wenn das Echosignal den Ultraschallwandler erreicht wird von diesem ein Ausgangssignal erzeugt. Die Distanz oder der Flüssigkeitsstand wird durch die Feststellung der Laufzeit zwischen der Aussendung des Ultraschallsignals und dem Echosignal ermittelt. Ein Komparator vergleicht das Signal des Ultraschallwandlers mit einem Referenzsignal und erzeugt dann ein Ausgangssignal, wenn ein Ultraschallsignal größeren Betrages bzw. Amplitude als das Referenzsignal empfangen wird. Um Probleme mit hohen Ausgangssignalen zu vermeiden, welche durch Vibration des Ultraschallwandlers nach der Aufnahme des Sendeimpulses verursacht sind, bevor der Ultraschallwandler in seine Ruhelage ausgeschwungen ist (Abklingzeit oder Ausschwingzeit genannt), wird das Referenzsignal auf einer Zeitbasis justiert. Hierzu liegt das Referenzsignal zu Anfang oberhalb des erwarteten Levels eines unerwünschten Abklingzeitsignals, jedoch wird ein gültiges Echosignal erkannt, wenn der Tank fast voll ist, weil das Echosignal ebenfalls eine hohe Amplitude hat. Das Referenzsignal nimmt zeitlich bis zu einem gewünschten Level ab, bei welchem Echosignale mit geringerer Amplitude entsprechend dem geringeren Flüssigkeitsstand im Tank einwandfrei identifiziert werden können.

Eine weitere Methode zur Verkürzung des Nahbereiches besteht in der laufzeitabhängigen Steuerung der Länge der ausgesandten Schallimpulse. Bei kurzer Laufzeit, d.h. bei nahem Objekt, werden sehr kurze Schallimpulse verwendet, so daß die Schwingungsamplitude des Schallwandlers nicht voll aufschwingt und somit der Nahbereich verkürzt ist.

Eine weitere Methode besteht in der Verwendung einer mittels eines Mikroprozessors und eines D/A-Wandlers dynamisch veränderten Schwellenspannung. Der Mikroprozessor steuert dabei den D/A-Wandler so, daß eine dynamische Schwelle entsteht, die immer über dem Ausschwingsignal liegt. Ein A/D-Wandler mißt dabei das abklingende Sendesignal.

Diese Methoden sind jedoch mit erheblichem Hard- und Softwareaufwand verbunden.

Der Erfindung liegt daher die Aufgabe zu Grunde, mit geringem Aufwand und kostengünstig eine Komparatorschaltung bereitzustellen, in welcher sich der zeitliche Verlauf der Schwellenspannung in jedem Einzelfall erneut automatisch an das individuelle Abklingverhalten des Schallwandlers und die Größe des Störpegels adaptiert.

Diese Aufgabe wird erfindungsgemäß gelöst durch eine adaptive Komparatorschaltung, insbesondere für einen akustischen Entfernungssensor, mit einem ersten Komparator, welcher
- einen ersten Schwellenwerteingang, an welchen eine erste Schwellenspannung angelegt ist, und
- einen ersten Signaleingang, an welchen ein Spannungsignal (USignal) angelegt ist,
aufweist und bei Vorliegen eines Spannungssignals, welches größer ist als die erste Schwellenspannung, ein erstes Schaltsignal abgibt, gekennzeichnet durch
- einen Signalgeber, insbesondere Mikrokontroler oder Mikroprozessor, welcher zeitweise ein Steuersignal abgibt,
- einen ersten Schalter, welcher eine Steuereinrichtung, einen Schaltereingang sowie einen Schalterausgang aufweist und durch Einwirkung des Steuersignals auf die Steuereinrichtung so steuerbar oder aktivierbar ist, daß er sich in geschlossenem Zustand befindet, wenn der Signalgeber ein Steuersignal abgibt, und sich andernfalls in geöffnetem Zustand befindet, oder umgekehrt, wobei der Schaltereingang mit dem positiven ersten Pol einer ersten Gleichspannungsquelle und der Schalterausgang mit dem ersten Schwellenwerteingang verbunden ist, so daß die erste Schwellenspannung gleich der am Schalterausgang anliegenden Spannung ist,
- einen Kondensator, über den der Schalterausgang mit dem negativen zweiten Pol der ersten Gleichspannungsquelle verbunden ist, und
- eine Diode, über welche der Schalierausgang mit dem ersten Signaleingang so verbunden ist, daß die Anode der Diode mit dem Schalterausgang verbunden ist.

Dies ist die erste Grundform einer erfindungsgemäßen adaptiven Komparatorschaltung. Erfindungsgemäß kann anstelle der Diode eine zweite Gleichspannungsquelle verwendet werden, deren positiver Pol an die Stelle der Anode der Diode und deren negativer Pol an die Stelle der Kathode der Diode tritt. Dies ist die zweite Grundform einer erfindungsgemäßen adaptiven Komparatorschaltung.

Diese beiden Grundformen können vorteilhaft erweitert werden, wie unten noch erläutert wird.

Ein erfindungsgemäßer akustischer Entfernungssensor umfaßt eine Steuereinheit, welche zeitweise Signalimpulse an einen Oszillator abgibt, welcher während des Anliegens eines Signalimpulses eine Wechselspannnung an einen Schallwandler abgibt, welcher durch diese zur Abstrahlung von Schallwellen angeregt wird und imstande ist, aufgrund von Reflexion zum Schallwandler zurückkommende Schallwellen als Echo zu empfangen und in ein elektrisches Empfangssignal umzusetzen, sowie einen Hüllkurvenformer, welchem das Empfangssignal zugeführt wird und welcher die Hüllkurve des Empfangssignals bildet und diese als Signalspannung ausgibt, und ist dadurch gekennzeichnet, daß die Signalspannung einer adaptiven Komparatorschaltung zugeführt wird, umfassend
- einen ersten Komparator, der einen ersten Schwellenwerteingang, an welchen eine erste Schwellenspannung angelegt ist, und einen ersten Signaleingang, an welchen ein Spannungsignal angelegt ist, aufweist und der bei Vorliegen eines Spannungssignals, welches größer ist als die erste Schwellenspannung, ein erstes Schaltsignal abgibt,
- einen Signalgeber, insbesondere Mikrokontroler oder Mikroprozessor, welcher zeitweise ein Steuersignal abgibt,
- einen ersten Schalter, welcher eine Steuereinrichtung, einen Schaltereingang sowie einen Schalterausgang aufweist und durch Einwirkung des Steuersignals auf die Steuereinrichtung so steuerbar oder aktivierbar ist, daß er sich in geschlossenem Zustand befindet, wenn der Signalgeber ein Steuersignal abgibt, und sich andernfalls in geöffnetem Zustand befindet, oder umgekehrt, wobei der Schaltereingang mit dem positiven ersten Pol einer ersten Gleichspannungsquelle und der Schalterausgang mit dem ersten Schwellenwerteingang verbunden ist, so daß die erste Schwellenspannung gleich der am Schalterausgang anliegenden Spannung ist,
- einen Kondensator, über den der Schalterausgang mit dem negativen zweiten Pol der ersten Gleichspannungsquelle verbunden ist, und
- eine Diode, über welche der Schalterausgang mit dem ersten Signaleingang so verbunden ist, daß die Anode der Diode mit dem Schalterausgang verbunden ist.

Ein erfindungsgemäßer akustischer Entfernungssensor umfaßt somit die erfindungsgemäße adaptive Komparatorschaltung.

Vorzugsweise ist das vom Signalgeber abgegebene Steuersignal ein elektrisches Steuersignal und der erste Schalter ein elektrisch oder elektronisch steuerbarer Schalter, z.B. ein Transistor, dessen Basis- oder Gate-Anschluß als Steueranschluß fungieren, oder z.B. ein Relais. In einer anderen Ausführungsform der Erfindung ist das vom Signalgeber abgegebene Steuersignal ein optisches Steuersignal, welches z.B. durch eine Leuchtdiode abgestrahlt wird, und der erste Schalter ein optisch steuerbarer Schalter, z.B. Fotowiderstand.

Sobald der Signalgeber ein Steuersignal abgibt, befindet sich der erste Schalter in geschlossenem Zustand, so daß der Kondensator mit der von der ersten Spannungsquelle abgegebenen Spannung aufgeladen wird. Nach Ende des Steuersignals befindet sich der Schalter in geöffnetem Zustand. Die Kondensatorspannung und damit die am ersten Schwellenwerteingang anliegende erste Schwellenspannung nimmt nun einen Wert an, welcher der Summe von Spannungssignal und Diodendurchflußspannung bzw. der Summe von Spannungssignal und der Spannung der zweiten Gleichspannungsquelle entspricht.

Die Diodendurchflußspannung bzw. die Spannung der zweiten Gleichspannungsquelle Werden im folgenden als "Grundspannungsabstand" dU bezeichnet.

Aufgabe der Diode bzw. der zweiten Gleichspannungsquelle ist es, eine Entladung des Kondensators und damit einen Abfall der Schwellenspannung so lange und nur so lange zu gestatten, bis die Differenz Schwellenspannung minus Spannungssignal auf den Grundspannungsabstand dU abgefallen ist, eine Wiederaufladung des Kondensators und damit einen Anstieg der Schwellenspannung jedoch zu verhindern, falls das Spannungssignal ansteigt.

Das zeitliche Verhalten der Schwellenspannung verläuft somit um einen Grundspannungsabstand dU parallelversetzt zu demjenigen des Spannungssignals, solange das Spannungssignal nicht ansteigt. Falls das Spannungssignal hingegen ansteigt, bleibt die Schwellenspannung konstant. Ein Maximum, z.B. Peak, des Spannungssignals führt also zu einer Auslösung des Komparators, sobald das Spannungssignal die Schwellenspannung übersteigt. Falls das Spannungssignal nach einem Anstieg wieder abfällt, folgt die Schwellenspannung dem Spannungssignal erneut parallelversetzt, sobald der Grundspannungsabstand dU wieder erreicht ist.

Erfindungsgemäß ist also die Schwellenspannung zu jedem Zeitpunkt der Empfangsphase durch die Größe des Spannungssignals festgelegt. Bei einem veränderten zeitlichen Verlauf des Spannungssignals erfolgt automatisch ein entsprechend veränderter zeitlicher Verlauf der Schwellenspannung. Der Verlauf der Schwellenspannung adaptiert sich somit automatisch an denjenigen des Spannungssignals.

Die Diodendurchflußspannung ist temperaturabhängig. Sie nimmt mit zunehmender Temperatur ab. Ein erfindungsgemäßer akustischer Entfernungssensor wird daher mit zunehmender Temperatur empfindlicher. Auf der anderen Seite nimmt die Dämpfung von Ultraschallwellen mit der Temperatur in der Regel zu. Somit wird der dadurch entstehende Empfindlichkeitsverlust vorteilhafterweise bei Verwendung einer Diode zur Herstellung der Grundspannungsabstandes dU zum Teil neutralisiert.

Wie oben bereits erwähnt wurde, kann erfindungsgemäß anstelle der Diode eine zweite Gleichspannungsquelle verwendet werden, deren positiver Pol an die Stelle der Anode der Diode und deren negativer Pol an die Stelle der Kathode der Diode tritt. Der Grundspannungsabstand dU ist in diesem Fall durch die von der zweiten Gleichspannungsquelle angegebene Spannung gegeben.

Die oben beschriebenen Grundformen erfindungsgemäßer adaptiver Komparatorschaltungen können vorteilhaft erweitert werden, wie im Folgenden erläutert wird.

In einer bevorzugten Ausführungsform der Erfindung ist eine der oben beschriebenen Grundformen erweitert durch einen ersten Widerstand, welcher zwischen dem ersten Pol und dem ersten Schwellenwerteingang geschaltet ist, und durch einen zweiten Widerstand, welcher zwischen dem ersten Schwellenwerteingang und dem zweiten Pol geschaltet ist, so daß der erste und der zweite Widerstand einen ersten Spannungsteiler bilden. Die Größe der ersten Schwellenspannung U_{ref1} strebt daher derjenigen Spannung entgegen, die durch den ersten Spannungsteiler vorgegeben ist.

Mit Hilfe des ersten Spannungsteilers kann daher der Spannungsabstand, um welchen die Schwellenspannung nach Abklingen des Spannungssignals U_{Signal} gegenüber dem Spannungssignal parallelversetzt ist, vorteilhafterweise vom Grundspannungsabstand dU auf einen Wert dUₐ verändert werden. Wenn diese Ausführungsform einer erfindungsgemäßen adaptiven Komparatorschaltung in einem akustischen Entfernungssensor zum Einsatz kommt, kann auf diese Weise die Empfindlichkeit des Entfernungssensors, die während der Ruhephase erreicht wird, verändert und insbesondere erhöht werden.

Der erste Spannungsteiler kann ein einstellbares Potentiometer sein, dessen Abgriff mit dem Schalterausgang verbunden ist.

Eine andere bevorzugte Ausführungsform einer erfindungsgemäßen adaptiven Komparatorschaltung umfaßt zusätzlich zu einer oben beschriebenen Grundformen:
- einen zweiten Komparator, welcher einen zweiten Schwellenwerteingang und einen zweiten Signaleingang aufweist und ein zweites Schaltsignal abgibt, wenn am zweiten Signaleingang eine größere Spannung anliegt als am zweiten Schwellenwerteingang,
- einen dritten Widerstand, über welchen der erste Pol der ersten Gleichspannungsquelle an den zweiten Schwellenwerteingang gelegt ist,
- einen vierten Widerstand, welcher einerseits mit dem zweiten Schwellenwerteingang und andererseits mit dem zweiten Pol der ersten Spannungsquelle verbunden ist, so daß der dritte und der vierte Widerstand einen zweiten Spannungsteiler bilden, und
- einen zweiten Schalter, welcher mit der Diode in Serie geschaltet und durch das zweite Schaltsignal so steuerbar oder aktivierbar ist, daß er sich in geschlossenem Zustand befindet, wenn der zweite Komparator das zweite Schaltsignal abgibt, und sich andernfalls in geöffnetem Zustand befindet.

Durch den zweiten Spannungsteiler liegt am zweiten Schwellenwerteingang eine Spannung an, welche im folgenden "zweite Schwellenspannung" U_{ref2} genannt wird. Solange der zweite Schalter geschlossen ist, folgt die erste Schwellenspannung dem abfallenden Spannungssignal U_{Signal} mit dem Grundspannungsabstand dU, wie oben erläutert. Erfindungsgemäß öffnet jedoch der zweite Schalter, sobald das Spannungssignal U_{Signal} die zweite Schwellenspannung U_{ref2} unterschreitet. Dadurch wird die Entladung des Kondensators und damit das Abfallen der ersten Schwellenspannung beendet.

Somit kann sich in dieser Ausführungsform der Erfindung der Kondensator nur so weit entladen, bis die erste Schwellenspannung U_{ref1} auf die Größe der zweiten Schwellenspannung U_{ref2} abgefallen ist.

Mit Hilfe des zweiten Spannungsteilers kann daher der Spannungsabstand, um welchen die erste Schwellenspannung nach Abklingen des Spannungssignals U_{Signal} gegenüber dem Spannungssignal U_{Signal} parallelversetzt ist, vorteilhafterweise vom Grundspannungsabstand dU auf einen Wert dU_{b} vergrößert werden. Wenn diese Ausführungsform einer erfindungsgemäßen adaptiven Komparatorschaltung in einem erfindungsgemäßen akustischen Entfernungssensor zum Einsatz kommt, kann auf diese Weise die Empfindlichkeit des Entfernungssensors, die während der Ruhephase erreicht wird, verringert werden.

Der zweite Spannungsteiler kann ein einstellbares Potentiometer sein, dessen Abgriff mit dem zweiten Schwellenwerteingang verbunden ist.

In einer weiteren Ausgestaltung dieser Ausführungsform der Erfindung zwischen dem Schalterausgang und dem zweiten Schwellenwerteingang ein fünfter Widerstand geschaltet. Die Größe der ersten Schwellenspannung U_{ref1} strebt daher derjenigen Spannung entgegen, die durch den zweiten Spannungsteiler vorgegeben ist. Insbesondere kann mit Hilfe des fünften Widerstandes zusätzlich erreicht werden, daß der Spannungsabstand, um welchen die Schwellenspannung gegenüber dem Spannungssignal parallelversetzt ist, einem Wert dU_{b} zustrebt, welcher vorteilhafterweise je nach der vom zweiten Spannungsteiler vorgegebenen Spannung nicht nur größer, sondern auch geringer sein kann als der Grundspannungsabstand dU.

Wenn diese Ausgestaltung einer erfindungsgemäßen adaptiven Komparatorschaltung in einem erfindungsgemäßen akustischen Entfernungssensor zum Einsatz kommt, kann auf diese Weise die Empfindlichkeit des Entfernungssensors, die während der Ruhephase erreicht wird, wahlweise vergrößert oder verringert werden.

In einer weiteren vorteilhaften Ausgestaltung der Erfindung durchläuft das Spannungssignal vor Erreichen des ersten Signaleinganges einen Spannungsfolger oder Impedanzwandler.

In einer weiteren Ausführungsform der Erfindung ist zur Begrenzung des Stromflusses zwischen dem Steuerausgang und dem Steueranschluß ein sechster Widerstand geschaltet. In einer weiteren Ausführungsform der Erfindung ist der erste Schalter ein Transistor, dessen Basis als Steueranschluß fungiert, wobei zwischen der Basis und dem ersten Pol der ersten Gleichspannungsquelle ein siebter Widerstand geschaltet ist.

In einer weiteren Ausführungsform der Erfindung ist die Diode bzw. die zweite Gleichspannungsquelle mit einem achten Widerstand in Serie geschaltet. Dieser bewirkt eine Verlangsamung der Entladung des Kondensators sowie eine Glättung der Schwellenspannung, was für viele Anwendungen vorteilhaft ist.

Die von der ersten Spannungsquelle gelieferte Spannung ist bevorzugt so gewählt, daß sie betragsmäßig größer ist als der Betrag des Maximums des Spannungsignals. Auf diese Weise wird verhindert, daß der erste Komparator ausgelöst wird, während der erste Schalter noch geschlossen ist, während also die Schwellenspannung sich noch nicht an das Spannungssignal adaptieren kann. Des Weiteren wird auf diese Weise vorteilhafterweise erreicht, daß die Adaptierung der Schwellenspannung an das Spannungssignal in jedem Fall sofort nach dem Öffnen des ersten Schalters beginnen kann.

Eine erfindungsgemäße adaptive Komparatorschaltung kann besonders vorteilhaft in einem akustischen Entfernungssensor zum Einsatz kommen. In diesem Fall wird das Spannungssignal zweckmäßigerweise durch die Hüllkurve des vom Schallwandler gelieferten Empfangssignals gebildet. Dieses besteht aus einer Überlagerung des Hintergrundsignales mit dem Nutzechosignal. Die Bildung der Hüllkurve z.B. mit Hilfe einer Gleichrichterschaltung ist im Stand der Technik bekannt und wird daher hier nicht näher erläutert.

Bei Abwesenheit eines Echos klingt die Hüllkurve während der Relaxationsphase exponentiell ab und geht bei Beginn der Ruhephase in eine waagerecht verlaufende Gerade über. Eine solche Hüllkurve wird im folgenden als "Hintergrund-Hüllkurve" bezeichnet. Die Schwellenspannung adaptiert sich erfindungsgemäß an den individuellen Verlauf der Hintergrund-Hüllkurve, indem sie diesem um einen Spannungsabstand dU bzw. dUₐ oder dU_{b} parallelversetzt folgt.

Ein Echo bewirkt, daß sich der Hintergrund-Hüllkurve ein Peak überlagert, so daß das Spannungssignal ansteigt. Erfindungsgemäß folgt die Schwellenspannung diesem Anstieg nicht, so daß der Komparator auslöst und das Echo auf diese Weise registrierbar ist.

Wie bereits oben erwähnt wurde, ist die von der ersten Spannungsquelle gelieferte Spannung bevorzugt so gewählt, daß sie betragsmäßig größer ist als der Betrag des Maximums des Spannungsignals. Da in diesem Fall die Schwellenspannung der Hintergrund-Hüllkurve bereits , unmittelbar zu Beginn der Relaxationsphase mit dem Spannungsabstand dU folgt, ist das Spannungssignal bei Abwesenheit eines Echos zu keinem Zeitpunkt größer als die Schwellenspannung, insbesondere auch während der gesamten Relaxationsphase nicht. Der Komparator kann daher über die gesamte Empfangsphase hinweg nur durch ein Echo ausgelöst werden, nicht jedoch durch das Abschwingverhalten des Schallwandlers. Somit ist ein erfindungsgemäßer akustischer Entfernungssensor prinzipiell sowohl während der Ruhephase als insbesondere auch während der gesamten Relaxationsphase fähig, ein Echo zu registrieren. Der unerwünschte Nahbereich des Sensors ist somit erfindungsgemäß erheblich verringert.

Kurzbeschreibung der Zeichnung, in welcher zeigen:
- Fig. 1: ein schematisches Blockschaltbild einer Variante eines akustischen Entfernungssensors gemäß dem Stand der Technik,
- Fig. 2: eine schematische Darstellung je eines typischen zeitlichen Verlaufes von a) Signalimpuls, b) Verstärkungsfaktor, c) Hüllkurve und d) Komparator-Ausgangssignal, welche sich beim Betrieb des Entfernungssensors von Fig. 1 einstellen können,
- Fig. 3: ein schematisches Blockschaltbild einer anderen Variante eines akustischen Entfernungssensors gemäß dem Stand der Technik,
- Fig. 4: eine schematische Darstellung je eines typischen zeitlichen Verlaufes von a) Taktimpuls, b) Hüllkurve und c) Komparator-Ausgangssignal, die beim Betrieb des Entfernungssensors von Fig. 3 auftreten können,
- Fig. 5: einen Schaltplan einer Ausführungsform einer erfindungsgemäßen Komparatorschaltung,
- Fig. 6: einen Schaltplan einer alternativen Ausführungsform einer erfindungsgemäßen komparatorschaltung,
- Fig. 7 und Fig. 8: ein schematische Blockschaltbilder von Ausführungsformen eines erfindungsgemäßen akustischen Entfernungssensors,
- Fig. 9: eine schematische Darstellung je eines typischen zeitlichen Verlaufes von a) Signalimpuls, b) Steuersignal, c) Hüllkurve und Schwellenspannung sowie d) Komparator-Schaltsignal" welche sich beim Betrieb des erfindungsgemäßen Entfernungssensors von Fig. 8 einstellen können, wobei während der Ruhephase ein Echo auftritt,
- Fig. 10: eine schematische Darstellung je eines typischen zeitlichen Verlaufes von a) Hüllkurve und Schwellenspannung sowie b) Komparator-Schaltsignal, welche sich beim Betrieb des erfindungsgemäßen Entfernungssensors von Fig. 8 einstellen können, wobei zusätzlich während der Relaxationsphase ein Echo auftritt, und
- Fig. 11 bis 13: Schaltpläne von weiteren Ausführungsformen erfindungsgemäßer Komparatorschaltungen.

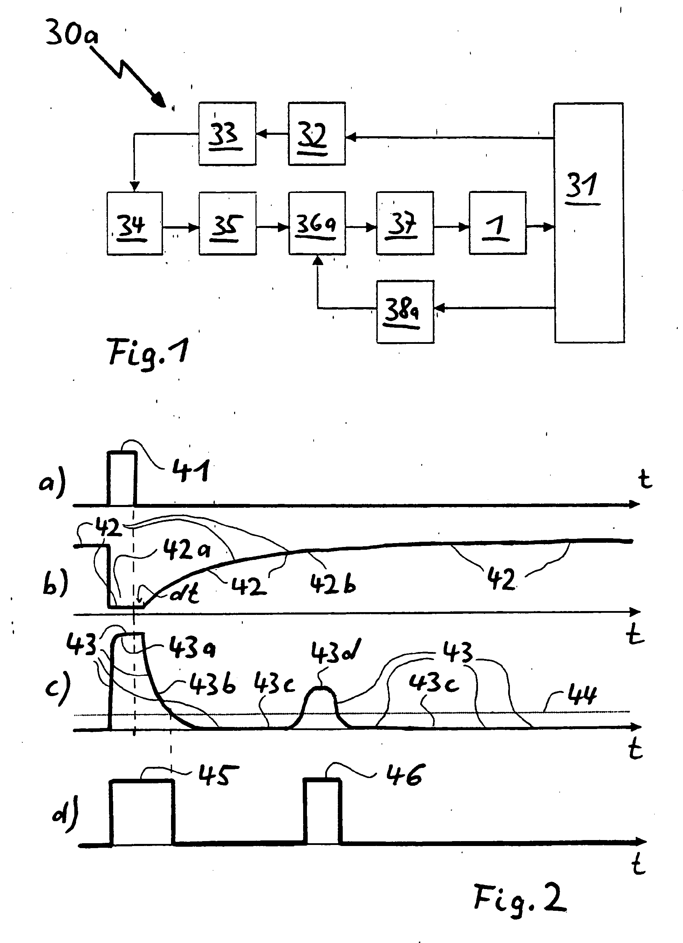

Die Fig.1 bis 4 dienen zur weiteren Erläuterung des Standes der Technik. Fig.1 zeigt ein schematisches Blockschaltbild einer Variante eines akustischen Entfernungssensors 30a, bei welchem eine dem Stand der Technik entsprechende Maßnahme zur Reduktion des Nahbereiches getroffen ist. Der Entfernungssensor 30a von Fig. 1 umfaßt eine Steuereinheit 31, einen Oszillator 32, einen Treiber 33, einen Schallwandler 34, einen Spannungsbegrenzer 35, einen Verstärker 36a mit steuerbarem Verstärkungsfaktor,

einen Hüllkurvenformer 37, einen Komparator 1 sowie eine Verstärkungsfaktor-Ansteuerungsstufe 38a.

Die Steuereinheit 31 sendet kurze Signalimpulse 41 an den Oszillator 32. Dieser oszilliert bei Anliegen eines Signalimpulses und gibt dabei eine Wechselspannung von z.B. 400 kHz ab, welche zunächst durch den Treiber 33 verstärkt und dann zur Anregung des Schallwandlers 34 benutzt wird, so daß dieser zu Schwingungen, d.h. zur Abgabe von Schallwellen angeregt wird. Entsprechend der kurzen Signalimpulse strahlt der Schallwandler 34 kurze Schallwellenpakete ab, welche die Sendeimpulse des Entfernungssensors 30a darstellen.

Während der Sendephase schwingt der Schallwandler 34 mit einer großen Schwingungsamplitude. Nach dieser Zeitdauer folgt eine Relaxationszeit, in der die Schwingungsamplitude - meist exponentiell - abklingt. In der sich daran anschließenden Ruhephase verbleibt die Schwingungsamplitude in der Regel auf einem konstanten mittleren Störpegel.

Das vom Schallwandler angegebene Signal und damit auch nach der abstandsproportionalen Laufzeit zurückkommende Echos werden über den Spannungsbegrenzer 35 dem Verstärker 36a mit steuerbarem Verstärkungsfaktor zugeführt. Der Spannungsbegrenzer hält die hohe zur Anregung des Schallwandlers benutzte Spannung vom Verstärker 36a fern. Der Hüllkurvenformer 37 bildet z.B. mit Hilfe einer internen Gleichrichterschaltung aus dem vom Spannungsbegrenzer 35 abgegebenen Wechselspannungsignal dessen Hüllkurve und gibt ein Hüllkurven-Spannungssignal, dessen zeitlicher Verlauf demjenigen der Hüllkurve entspricht, an den Komparator 1 ab.

Der Komparator 1 gibt ein Schaltsignal zur Auswertung an die Steuereinheit 31 ab, wenn das Hüllkurven-Spannungssignal größer ist als eine erste fest vorgegebene Schwellenspannung. Insbesondere gibt der Komparator dann ein Schaltsignal ab, wenn ein Echosignal empfangen wird, dessen Größe diejenige der Schwellenspannung übersteigt.

Der Verstärkungsfaktor des Verstärkers 36a wird durch die Verstärkungsfaktor-Ansteuerungsstufe 38a zeitabhängig so gesteuert, daß er während und unmittelbar nach dem Sendepuls minimal ist und anwächst, sobald die Schwingungsamplitude des Schallwandlers 34 so weit abgeklungen ist, daß die Größe des Empfangssignales nicht mehr durch den Spannungsbegrenzer 35 begrenzt wird. Das Anwachsen des Verstärkungsfaktors beginnt daher nicht völlig zeitgleich mit dem Ende des Signalimpulses, sondern gegenüber diesem um eine bestimmte Verzögerungszeit dt (Fig. 2) verspätet. Die notwendige Zeitinformation zur Synchronisierung des zeitlichen Verhaltens des Verstärkungsfaktor mit dem Rhythmus der Sendepulse erhält die Verstärkungsfaktor-Ansteuerungsstufe 38a von der Steuereinheit 31. Auf diese Weise läßt sich eine Verkürzung des Nahbereiches erreichen. Der zeitliche Verlauf des Verstärkungsfaktors kann vorteilhaft so gewählt sein, daß der abstandsabhängigen Dämpfung des Echos entgegengewirkt wird und die Systemempfindlichkeit konstant bleibt.

Fig. 2 zeigt eine schematische Darstellung je eines zeitlichen Verlaufes von a) Signalimpuls, b) Verstärkungsfaktor des Verstärkers 36a, c) Hüllkurve und Schwellenwert Sowie d) Komparator-Ausgangssignal, welche sich beim Betrieb des Entfernurtgssensors von Fig. 1 typischerweise einstellen können. Die Zeitachsen der Kurven a) bis d) sind zur Veranschaulichung der Zeitabläufe identisch gewählt. Wie bereits unter Bezug auf Fig.1 erläutert wurde, erreicht der Verstärkungsfaktor 42 während des Signalpulses 41 ein Minimum 42a, welches eine um bestimmte Verzögerungszeit dt länger andauert als der Signalimpuls 41, und wächst dann monoton mit der Zeit an.

Die Hüllkurvenspannung 43 erreicht während des Signalimpulses 41 ein Maximum (Hüllkurvenabschnitt 43a), auf welchem sie nach Ende des Signalimpulses 41 noch für die Verzögerungszeit dt verbleibt. Danach fällt die Hüllkurvenspannung 43 während der Relaxationsphase ab (Hüllkurvenabschnitt 43b), wobei der Kurvenverläuf des Hüllkurvenabschnittes 43b durch die Multiplikation des z.B. exponentiellen Abklingens der Schallwandler-Amplitude mit dem anwachsenden Verstärkungsfaktor gegeben ist. Die vorübergehende Absenkung des Verstärkungsfaktors während und nach dem Signalimpuls bewirkt, daß die Hüllkurvenspannung 43 die Schwellenspannung 44 früher unterschreitet, als dies bei nicht abgesenktem Verstärkungsfaktor der Fall wäre. Die vorteilhafte Folge davon ist eine Verkürzung des Nahbereiches. In der Ruhephase erreicht die Hüllkurvenspannung 43 schließlich einen niedrigen konstanten Pegel (Hüllkurvenabschnitt 43c). Die Schwellenspannung 44 ist zeitlich konstant.

Da der Komparator 1 ein Schaltsignal abgibt, sobald die Hüllkurvenspannung 43 die Schwellenspannung 44 übersteigt, wird nachteiligerweise zu Beginn des Signalimpulses 41 immer ein Blind-Schaltsignal 45 ausgelöst, welches andauert, bis die Hüllkurvenspannung 43 unter den Schwellenwert 44 gesunken ist. Ein Echosignal (Hüllkurvenabschnitt 43d) bewirkt ein Nutz- Schaltsignal 46, so daß die Steuereinheit in der Lage sein muß, ein Nutz-Schaltsignal 46 von einem Blind-Schaltsignal 45, welches ohne Anwesenheit eines Echosignals allein durch den Signalimpuls 41 verursacht wurde, zu unterscheiden. Eine solche Unterscheidungsfähigkeit ist mit Aufwand an Hard- oder Software und daher mit Nachteilen verbunden. Weitere Nachteile, welche mit einem Entfernungssensor der in Fig. 1 veranschaulichten Art verbunden sind, wurden bereits oben erläutert.

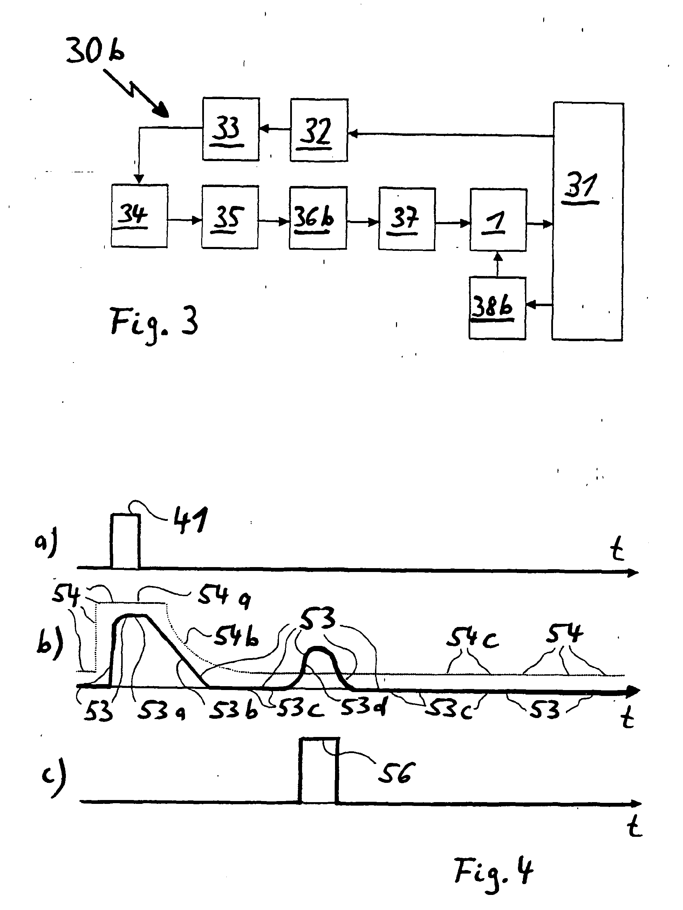

Wie bereits oben erläutert wurde, besteht eine weitere Methode zur Verkürzung des Nahbereiches darin, eine zeitlich veränderliche Schwellenspannung bereitzustellen. Fig.3 zeigt zur weiteren Erläuterung des Standes der Technik ein schematisches Blockschaltbild einer entsprechenden Variante eines akustischen Entfernungssensors 30b. Der Entfernungssensor 30b von Fig. 3 umfaßt eine Steuereinheit 31, einen Oszillator 32, einen Treiber 33, einen Schallwandler 34, einen Spannungsbegrenzer 35, einen vorzugsweise logarithmischen Verstärker 36b, einen Hüllkurvenformer 37, einen Komparator 1 sowie eine Schwellenwert-Steuerungsstufe 38b, welche eine zeitlich veränderliche Schwellenspannung erzeugt und an den Komparator 1 ausgibt.

Der wesentliche Unterschied zu dem in Fig. 1 veranschaulichten Entfernungssensor 30a besteht darin, daß die Nahbereichsverkürzung nicht durch einen zeitlich veränderlichen Verstärkungsfaktor, sondern durch eine zeitlich veränderliche Schwellenspannung erreicht wird.

Fig. 4 zeigt eine schematische Darstellung je eines zeitlichen Verlaufes von a) Signalimpuls, b) Hüllkurve und Schwellenwert sowie c) Komparator-Ausgangssignal, welche sich beim Betrieb des Entfernungssensors 30b von Fig. 3 typischerweise einstellen können. Die Zeitachsen der Kurven a) bis c) sind zur Veranschaulichung der Zeitabläufe identisch gewählt.

Die Hüllkurvenspannung 53 erreicht während eines Signalimpulses 41 ein Maximum (Hüllkurvenabschnitt 53a), auf welchem sie nach Ende des Signalimpulses 41 noch für die Verzögerungszeit dt verbleibt. Danach fällt die Hüllkurvenspannung 53 während der Relaxationsphase linear ab (Hüllkurvenabschnitt 53b), da der Verstärker 36b ein logarithmischer Verstärker ist. In der Ruhephase erreicht die Hüllkurvenspannung 53 schließlich einen niedrigen konstanten Pegel (Hüllkurvenabschnitt 53c).

Die Schwellenspannung 54 ist zeitlich nicht konstant, sondern wird durch die Schwellenwert-Steuerungsstufe 38b so gesteuert, daß sie vor jedem Signalimpuls 41 ansteigt, für eine bestimmte Zeit auf einem Maximalwert bleibt (Kurvenabschnitt 54a), danach abfällt (Kurvenabschnitt 54b) und schließlich während der Ruhephase einen konstanten Pegel erreicht (Kurvenabschnitt 54c), wobei die Schwellenspannung 54 immer größer bleibt als die Hüllkurvenspannung 53, solange kein Echo empfangen wird. Die notwendige Zeitinformation zur Synchronisierung des zeitlichen Verhaltens der Schwellenspannung 54 mit dem Rhythmus der Signalimpulse 41 erhält die Schwellenwert-Steuerungsstufe 38b von der Steuereinheit 31.

Die vorteilhafte Folge ist eine Verkürzung des Nahbereiches. Des Weiteren wird vorteilhafterweise durch den Signalimpuls 41 kein Blind-Schaltsignal ausgelöst. Vielmehr wird nur durch den mit einem Echo verbundenen Anstieg der Hüllkurve 53 (Hüllkurvenabschnitt 53d) ein Schaltsignal 56 ausgelöst, so daß das Schaltsignal 56 ein Nutz-Schaltsignal 56 ist. Nachteile, welche mit einem Entfernungssensor der in Fig. 3 veranschaulichten Art verbunden sind, wurden bereits oben erläutert.

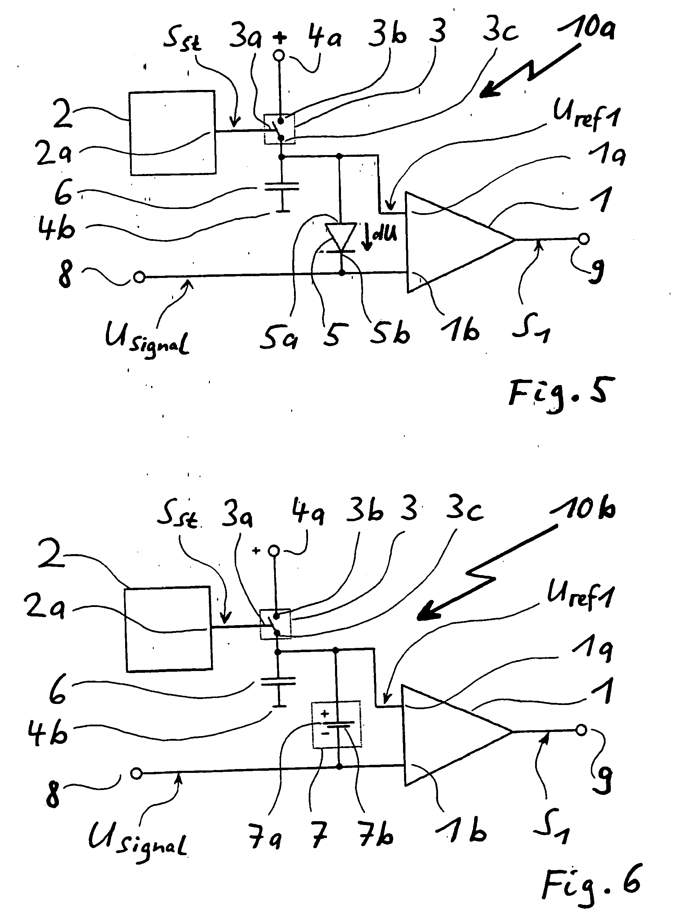

Nun wird auf Fig. 5 Bezug genommen, welche einen schematischen Schaltplan einer Ausführungsform 10a einer erfindungsgemäßen adaptiven Komparatorschaltung veranschaulicht. Diese umfaßt einen Signalgeber 2, einen ersten steuerbaren Schalter 3, einen Kondensator 6, eine Diode 5 und einen ersten Komparator 1, welcher einen ersten Schwellenwerteingang 1a und einen ersten Signaleingang 1b aufweist.

Am ersten Schwellenwerteingang 1a liegt eine Schwellenspannung U_{ref1} an, welche in der erfindungsgemäßen adaptiven Komparatorschaltung intern erzeugt wird. Am Signaleingang 1b liegt ein Spannungssignal U_{Signal} an, welches z.B. eine Hüllkurve des Empfangssignals eines Schallwandlers sein kann und der erfindungsgemäßen adaptiven Komparatorschaltung über eine erste Klemme 8 zugeführt wird.

Der erste Komparator 1 gibt ein erstes Schaltsignal S₁ ab, wenn das Spannungssignal U_{Signal} größer ist die erste Schwellenspannung U_{ref1}. Das erste Schaltsignal S₁ kann z.B. über eine zweite Klemme 9 abgegriffen und einer Auswertung zugeführt werden.

Der Signalgeber 2 gibt über einen Steuerausgang 2a zeitweise, z.B. in regelmäßigen Zeitabständen, ein elektrisches Steuersignal S_{St} ab. Der Signalgeber 2 kann im einfachsten Fall z.B. ein manuell betätigter Taster sein. Des Weiteren kann der Signalgeber z.B. eine elektronische Rechteck-Taktgeberschaltung mit geeignetem Tastverhältnis sein. Bevorzugterweise ist der Signalgeber 2 ein Mikrokontroler oder Mikroprozessor, welcher so programmiert ist, daß er in regelmäßigen Zeitabständen ein elektrisches Steuersignal S_{St} mit einer Zeitdauer von typischerweise z.B. 20 Mikrosekunden abgibt.

Der erste Schalter 3 weist eine Steuereinrichtung 3a, einen Schaltereingang 3b sowie einen Schalterausgang 3c auf. Die Steuereinrichtung 3a ist mit dem Steuerausgang 2a verbunden und ist durch das Steuersignal S_{St} so steuerbar, daß er sich in geschlossenem Zustand befindet, wenn der Signalgeber 2 ein Steuersignal S_{St} abgibt, und sich andernfalls in geöffnetem Zustand befindet. Der erste Schalter 3 kann z.B. ein Transistor sein.

Der Schaltereingang 3b ist mit dem positiven ersten Pol 4a einer (nicht gezeigten) ersten Gleichspannungsquelle 4a, 4b verbunden. Der Schalterausgang 3c ist mit dem ersten Schwellenwerteingang la des Komparators 1 verbunden, so daß die erste Schwellenspannung U_{ref1} gleich der am Schalterausgang 3c anliegenden Spannung ist. Bei geschlossenem Schalter 3 liegt somit das Potential des positiven ersten Poles 4a am ersten Schwellenwerteingang 1a des Komparators 1an.

Der Schalterausgang 3c ist ferner über einen Kondensator 6 an den negativen zweiten Pol 4b der ersten Gleichspannungsquelle gelegt, so daß der Kondensator 6 bei geschlossenem Schalter 3 mit der Spannung der ersten Gleichspannungsquelle aufgeladen wird.

Der Schalterausgang 3c ist ferner mit der Anode 5a einer Diode 5 verbunden. Die Kathode 5b der Diode 5 ist mit dem ersten Signaleingang 1b des Komparators 1 verbunden.

Sobald der Signalgeber 2 ein Steuersignal S_{St} abgibt, befindet sich der erste Schalter 3 in geschlossenem Zustand. Der Kondensator 6 wird daher mit der von der ersten Spannungsquelle abgegebenen Spannung aufgeladen. Diese Spannung liegt bei geschlossenem Schalter 3 auch am Schwellenwerteingang 1a an.

Nach Ende des Steuersignals S_{St} befindet sich der Schalter 3 in geöffnetem Zustand. Der Kondensator 6 kann sich nun erfindungsgemäß über die Diode 5 so weit entladen, bis die erste Schwellenspannung U_{ref1} einen Wert erreicht, welcher der Summe des Spannungssignals U_{Signal} und der Diodendurchflußspannung dU entspricht. Dies bedeutet, daß die Spannung, die sich am Kondensator 6 einstellt, abhängig ist von der Größe des Spannungssignals U_{Signal}: je keiner das Spannungssignal U_{Signal}, desto weiter fällt erfindungsgemäß die Spannung am Kondensator 6 und damit die Schwellenspannung U_{ref1} ab.

Es stellt sich somit eine Schwellenpannung U_{ref1} ein, welche um den Grundspannungsabstand dU größer ist als das Spannungssignal U_{Signal}.

Die Aufgabe der Diode 5 ist es erfindungsgemäß, eine Entladung des Kondensators 6 und damit einen Abfall der Schwellenspannung U_{ref1} so lange und nur so lange zu gestatten, bis die Differenz U_{ref1} - U_{Signal}, auf den Grundspannungsabstand dU abgefallen ist, eine Wiederaufladung des Kondensators und damit einen Anstieg der Schwellenspannung jedoch zu verhindern, falls das Spannungssignal U_{Signal} ansteigt. Falls das Spannungssignal U_{Signal} abfällt, wird also die Schwellenspannung U_{ref1} dem Spannungssignal U_{Signal} im Abstand dU nachgeführt. Falls dagegen das Spannungssignal U_{Signal} ansteigt, bleibt die Schwellenspannung U_{ref1} aufgrund der Sperrwirkung der Diode 5 konstant.

Selbstverständlich kann die Polung der ersten Gleichspannungsquelle gegenüber Fig. 1 auch umgekehrt sein, so daß der erste Pol 4a negativ und der zweite Pol 4b positiv ist. In diesem Fall muß die Diode 5 in der Schaltung von Fig. 1 in umgekehrter Richtung angeordnet sein, so daß ihre Kathode mit dem Schalterausgang 3c und ihre Anode mit dem zweiten Pol 4b verbunden ist.

In einer anderen Ausführungsform der Erfindung ist der Grundspannungsabstand dU durch gleichsinnige Serienschaltung einer Mehrzahl von Dioden 5 oder zweiten Gleichspannungsquellen 7 vergrößert.

Erfindungsgemäß kann alternativ die Funktion der Diode 5 durch eine zweite Gleichspannungsquelle übernommen werden, deren positiver Pol an die Stelle der Anode 5a der Diode 5 und deren negativer Pol an die Stelle der Kathode 5b der Diode 5 tritt. Fig. 6 zeigt eine Ausführungsform 10b einer erfindungsgemäßen adaptiven Komparatorschaltung, welche alternativ zu derjenigen von Fig. 1 verwendet werden kann. Die Diode von Fig. 5 ist durch eine zweite Spannungsquelle 7 ersetzt, wobei deren positiver Pol 7a an die Stelle der Anode 5a und der negative Pol 7b an die Stelle der Kathode 5b getreten ist. Der Grundspannungsabstand dU von Fig. 1 ist nun durch die Spannung der Spannungsquelle 7 ersetzt, d.h. der Grundspannungsabstand dU zwischeri U_{ref1}, und U_{Signal} ist nun durch die von der zweiten Spannungsquelle angegebene Spannung gegeben.

Falls die von der zweiten Spannungsquelle 7 abgegebene Spannung regelbar oder einstellbar ist, kann der Grundspannungsabstand dU nach Bedarf variiert werden.

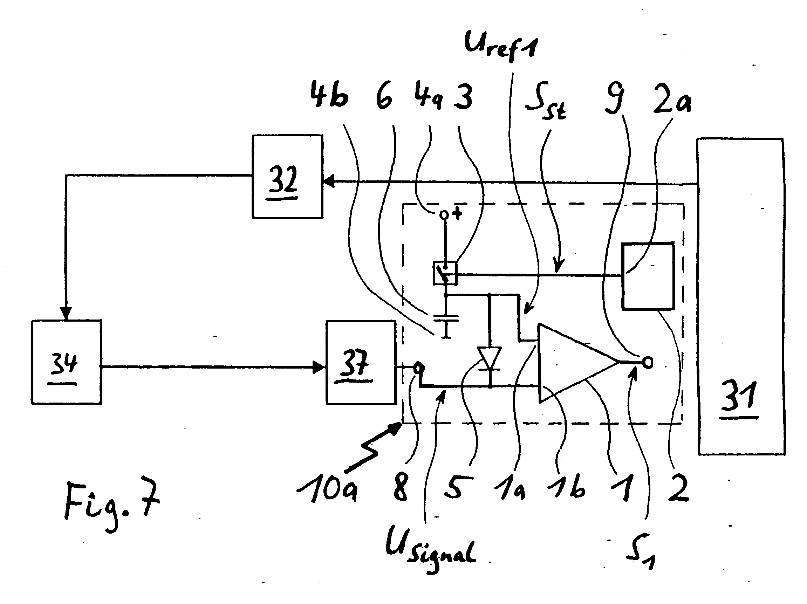

Fig. 7 zeigt ein schematisches Blockschaltbild einer Ausführungsform eines erfindungsgemäßen akustischen Entfernungssensors, in welchem die adaptive Komparatorschaltung 10a von Fig. 5 zum Einsatz kommt. Eine Steuereinheit 31 gibt zeitweise, vorzugsweise in regelmäßigen Zeitabständen, kurze Signalimpulse von z.B. je 25 Mikrosekunden Dauer an einen Oszillator 32 ab. Bei Anliegen eines Signalimpulses gibt der Oszillator 32 eine Wechselspannnung an einen Schallwandler 34 ab, welcher durch diese zur Abstrahlung von Schallwellen angeregt wird. Der Schallwandler 34 ist imstande, an einem Objekt reflektierte und zum Schallwandler 34 zurückkommende Schallwellen als Echo zu empfangen und in ein elektrisches Empfangssignal umzusetzen, wobei die Laufzeit der Schallwellen ein Maß für die Entfernung des Objektes darstellt.

Das Empfangssignal wird einem Hüllkurvenformer 37 zugeführt, welcher die Hüllkurve des Empgangssignals bildet und diese als Signalspannung U_{Signal} über die Klemme 8 an die adaptive Komparatorschaltung 10a von Fig. 5 abgibt.

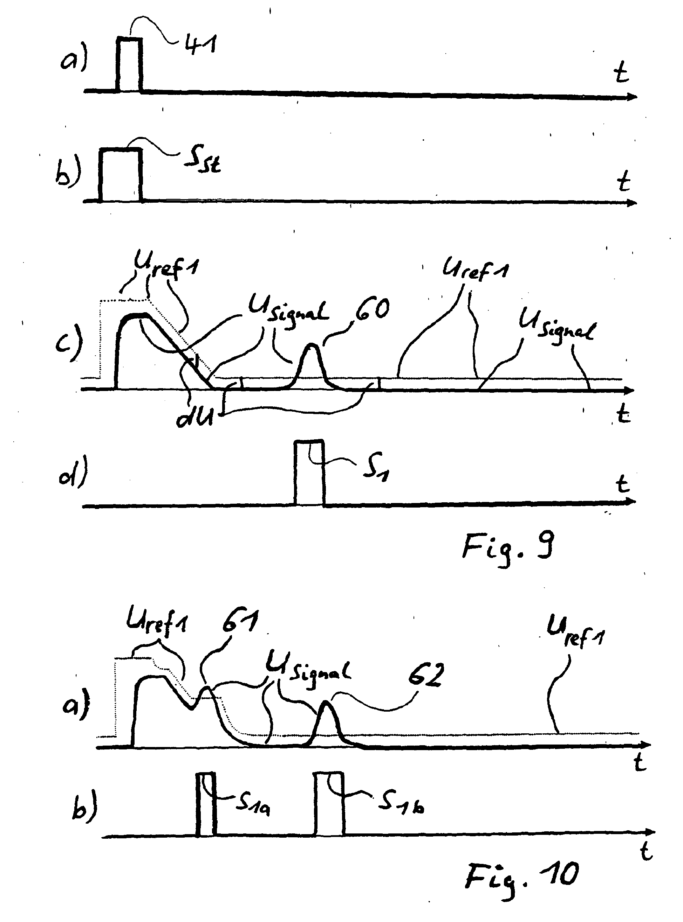

In einer bevorzugten Ausführungsform der Erfindung sind die Signalimpulse 41, welche die Steuereinheit 31 an den Oszillator 32 abgibt, mit den Steuersignalen S_{St}, welche die Steuereinheit 2 an den Schalter 3 abgibt, so synchronisiert, daß die Steuersignale S_{St} jeweils kurz vor den Signalimpulsen 41 beginnen; wie unten unter Bezug auf Fig. 9a und 9b noch erläutert wird. Auf diese Weise ist sichergestellt, daß die Schwellenspannung U_{ref1} bereits zu Beginn der Sendephase größer ist als das Spannungssignal U_{Signal}, so daß kein Blind-Schaltsignal ausgelöst wird.

In einer weiteren bevorzugten Ausführungsform der Erfindung sind die Signalimpulse 41 vorteilhaft so mit den Steuersignalen S_{St} synchronisiert, daß die Steuersignale S_{St} jeweils vor oder gleichzeitig mit dem Ende der Signalimpulse 41 beendet werden. Auf diese Weise ist sichergestellt, daß die Schwellenspannung U_{ref1} ohne Zeitverzögerung bereits zu Beginn der Relaxationsphase dem abfallenden Spannurigssignal U_{Signal} mit dem Spannungsabstand dU nachgeführt wird.

Die Empfindlichkeit des Entfernungssensors ist durch den Grundspannungsabstand dU gegeben.

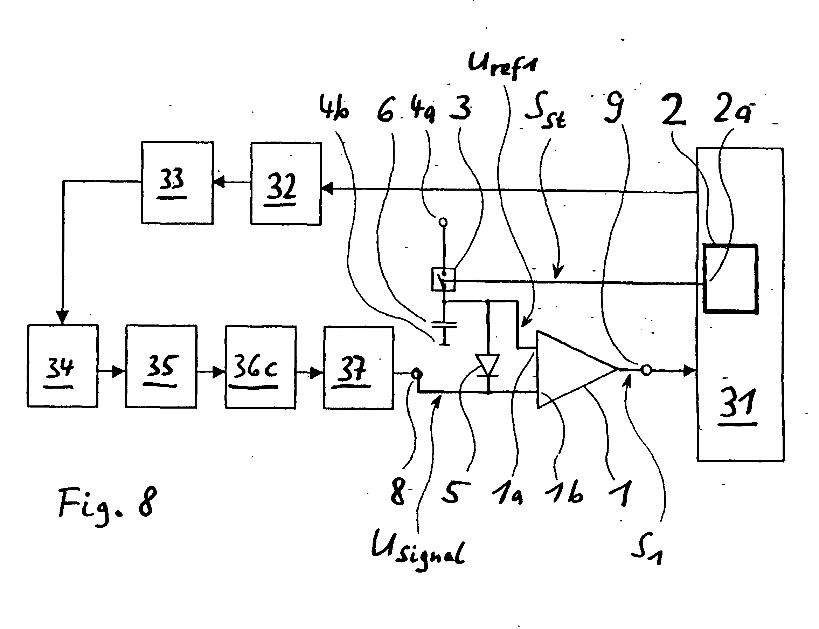

Fig. 8 zeigt ein schematisches Blockschaltbild einer weiteren Ausführungsform eines erfindungsgemäßen akustischen Entfernungssensors, in welchem ebenfalls die adaptive Komparatorschaltung 10a von Fig. 5 zum Einsatz kommt. Der Entfernungssensor von Fig. 8 weist gegenüber demjenigen von Fig. 7 zusätzlich einen Treiber 33 auf, welcher die vom Oszillator 32 abgegebene Wechselspannung verstärkt und an den Schallwandler 34 abgibt. Ferner wird das Empfangssignal vor seiner Einspeisung in den Hüllkurvenformer 37 durch einen Spannungsbegrenzer 35 und durch einen logarithmischen Verstärker 36c geführt.

Der Spannungsbegrenzer, 35 wirkt u.a. einer Übersteuerung des Verstärkers entgegen. Der Verstärker 36c dient dazu, den niedrigen Eingangspegel von einigen Mikrovolt an den höheren Eingangspegel der nachfolgenden Auswerteschaltung anzupassen.

In Fig. 8 ist ferner zur Erleichterung der Synchronisierung der Signalgeber 2 in die Steuereinheit 31 aufgenommen. Beispielsweise können der Signalgeber 2 und die Steuereinheit 31 in einer einzigen Einheit, zusammengefaßt sein, z.B. in einem Mikroprozessor, welcher zugleich sowohl die Funktion des Signalgebers 2 als auch diejenige der Steuereinheit 31 erfüllt.

In Fig. 8 wird ferner das erste Schaltsignal S₁ der Steuereinheit 31 zur Auswertung, insbesondere zur Laufzeitbestimmung und Entfernungsberechnung, zugeführt.

Die Figuren 9 und 10 dienen zur weiteren Erläuterung der vorteilhaften Wirkungen der Erfindung, wobei die Zeitachsen aller Kurvenverläufe zur Veranschaulichung der Zeitabläufe identisch gewählt sind.

Fig. 9 zeigt eine schematische Darstellung je eines typischen zeitlichen Verlaufes von a) Signalimpuls, b) Steuersignal, c) Spannungssignal und Schwellenspannung sowie d) Komparator-Schaltsignal, welche sich beim Betrieb des erfindungsgemäßen Entfernungssensors von Fig. 8 einstellen können, wobei während der Ruhephase ein Echo auftritt.

Die Steuereinheit 31 sendet kurze Signalimpulse 41 an den Oszillator 32, wodurch der Schallwandler 34 zur Abstrahlung eines Schallwellenpaketes angeregt wird (Fig. 9 Kurve a). Des Weiteren gibt der Signalgeber 2 ein Steuersignal S_{St}, an den Schalter 3 ab, welches mit dem Signalimpuls 41 so synchronisiert ist, daß das Steuersignale Sₛₜ kurz vor dem Signalimpuls 41 beginnt und noch während dessen Andauern oder zeitgleich mit diesem beendet wird (Fig. 9 Kurve b).

Fig. 9 Kurve c zeigt den Verlauf des Spannungssignals U_{Signal} (durchgezogene Kurve), welcher mit der Hüllkurve identisch ist, und den Verlauf der Schwellenspannung U_{ref1} (punktierte Kurve). Der Verlauf des Spannungssignals U_{Signal} während der Sende- und Relaxationsphase und zu Beginn der Ruhephase entspricht im Wesentlichen demjenigen der Hüllkurve 53, der unter Bezug auf Fig. 4 erläutert wurde. Während das Steuersignal S_{St}, am Schalter 3 anliegt, ist dieser geöffnet, so daß sich eine Schwellenspannung U_{ref1} einstellt, welche mit der von der ersten Gleichspannungsquelle 4a, 4b abgegebenen Spannung identisch ist (Fig. 9 Kurve c). Diese ist daher vorteilhaft so gewählt, daß sie größer ist als das Maximum des Spannungsignals, so daß die Adaption der Schwellenspannung an das Spannungssignal sofort nach Öffnen des Schalters 3 beginnt. Im vorliegenden Beispiel ist die maximal mögliche Größe des Spannungssignals durch den Spannungsbegrenzer 35 oder durch die Übersteuerungsgrenze des Verstärkers 36c (Fig. 8) vorgegeben.

Nach Ende des Steuersignal S_{St} stellt sich erfindungsgemäß eine Schwellenspannung U_{ref1} ein, welche um den Grundspannungsabstand dU größer ist als das Spannungssignal L_{Signal}. Daher fällt die Schwellenspannung U_{ref1} unmittelbar nach dem Ende des Steuersignals um einen bestimmten Betrag ab. Von diesem Zeitpunkt an verläuft die Schwellenspannung erfindungsgemäß um den Spannungsabstand dU parallelversetzt zu demjenigen des Spannungssignals U_{Signal}, solange dieses nicht ansteigt. Ein Blind-Schaltsignal wird nicht ausgelöst. Falls das Spannungssignal U_{Signal} hingegen ansteigt, bleibt die Schwellenspannung konstant, so daß ein ersten Echo-Peak 60 des Spannungssignals U_{Signal} zu einer Auslösung des Komparators 1 führt, sobald das Spannungssignal U_{Signal} die Schwellenspannung U_{ref1} übersteigt. In diesem Fall gibt der Komparator 1 ein erstes Schaltsignal S₁ ab (Fig. 9 Kurve d).

Fig. 10 zeigt eine schematische Darstellung je eines typischen zeitlichen Verlaufes von a) Spannungssignal und Schwellenspannung sowie b) Komparator-Schaltsignal, welche sich beim Betrieb des erfindungsgemäßen Entfernungssensors von Fig. 8 einstellen können, wobei während der Relaxationsphase ein Echo und während Ruhephase ein weiteres Echo auftritt. Die zeitlichen Verläufe des Signalimpulses 41 und des Steuersignals S_{St} seien identisch mit denjenigen von Fig. 9.

Während der Relaxationszeit tritt ein Echsosignal auf, was sich durch einen zweiten Echo-Peak 61 der Spannungssignal U_{Signal} bemerkbar macht (Fig. 10 Kurve a). Bis zum Beginn des zweiten Echo-Peaks 61 entsprechen die Kurvenverläufe denjenigen von Fig. 9 Kurve c. Erfindungsgemäß kommt der Rückgang der Schwellenspannung U_{ref1} jedoch zum Stillstand, sobald das Spannungssignal U_{Signal} nicht mehr fällt, und durch den zweiten Echo-Peak 61 wird ein erstes Schaltsignal S₁ₐ ausgelöst. Nach dem während der Relaxationszeit auftretenden zweiten Echo-Peak 61 stellt sich wieder der Spannungsabstand, dU zwischen Schwellenspannung U_{ref1} und Spannungssignal U_{Signal} ein. Während der Ruhephase tritt ein weiterer, dritter Echo-Peak 62 des Spannungssignals U_{Signal} auf, wodurch ein weiteres Schaltsignal S_{1b} ausgelöst wird.

Nun wird auf die Fig. 11 bis 13 Bezug genommen welche weitere vorteilhafte Ausführungsformen einer erfindungsgemäßen adaptiven Komparatorschaltung zeigen.

Fig. 11 zeigt eine bevorzugte Ausführungsform 10c der Erfindung, welche sich von der adaptiven Komparatorschaltung 10a von Fig. 6 wie folgt unterscheidet:
a) Der erste Schalter ist ein Transistor 103. Die Basis 103a des Transistors 103 dient als Steueranschluß, der Emitter 103b als Schaltereingang und der Kollektor 103c als Schalterausgang.
b) Zwischen dem ersten Pol 4a und dem ersten Schwellenwerteingang 1a ist ein erster Widerstand 11 und zwischen dem ersten Schwellenwerteingang 1a und dem zweiten Pol 4b ein zweiter Widerstand 12 geschaltet, so daß der erste Widerstand 11 und der zweite Widerstand 12 einen ersten Spannungsteiler 11, 12 bilden. Die Größe der ersten Schwellenspannung U_{ref1} strebt daher derjenigen Spannung entgegen, die durch den ersten Spannungsteiler vorgegeben ist. Mit Hilfe des ersten Spannungsteilers 11, 12 kann daher der Spannungsabstand, um welchen die Schwellenspannung nach Abklingen des Spannungssignals U_{Signal} gegenüber dem Spannungssignal parallelversetzt ist, vorteilhafterweise vom Grundspannungsabstand dU auf einen Wert dUₐ verändert werden. Wenn diese Ausführungsform 10c einer erfindungsgemäßen adaptiven Komparatorschaltung in einem erfindungsgemäßen akustischen Entfernungssensor zum Einsatz kommt, kann auf diese Weise die Empfindlichkeit des Entfernungssensors, die während der Ruhephase erreicht wird, verändert und insbesondere erhöht werden. Dies ist für viele Anwendungen, z.B. zur Detektion kleiner Objekte, vorteilhaft.

Der erste Spannungsteiler kann ein einstellbares Potentiometer sein, dessen Abgriff mit dem Schalterausgang verbunden ist.
c) Zwischen dem Steuerausgang 2a des Signalgebers 2 und der Basis 103a ist ein sechster Widerstand 16 und zwischen der Basis 103a und dem ersten Pol 4a, der im gezeigten Beispiel ein Pluspol ist, ein siebter Widerstand 17 geschaltet. Der Zweck dieser Widerstände wurde bereits oben erläutert.
d) Die Diode 5 ist mit einem achten Widerstand 18 in Serie geschaltet, welcher dazu dient, die Entladung des Kondensators 6 zu verlangsamen und damit die Geschwindigkeit, mit der die Adaptierung der Schwellenspannung U_{ref1} an das Spannungssignal U_{Signal} erfolgt, zu verringern. Der achte Widerstand 18 dient ferner dazu, den Verlauf der Schwellenspannung U_{ref1} gegenüber sehr schnellen Schwankungen des Spannungssignals U_{Signal} zu glätten.

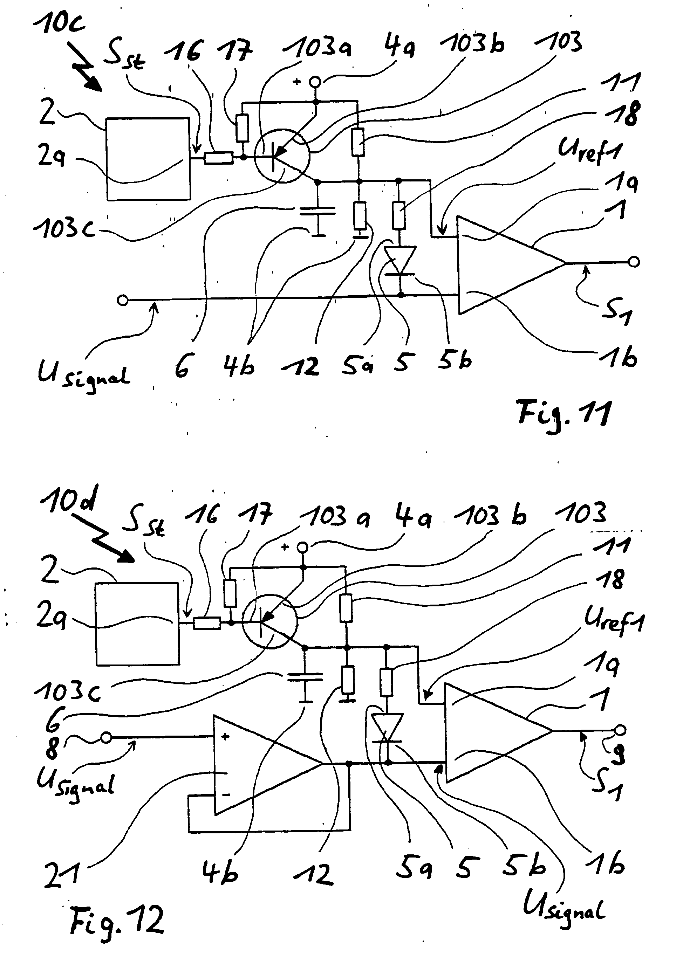

Fig. 12 zeigt eine weitere bevorzugte Ausführungsform 10d der Erfindung, welche sich von der' adaptiven Komparatorschaltung 10c von Fig. 11 dadurch unterscheidet, daß das Spannungssignal U_{Signal} vor Erreichen des ersten Signaleinganges 1b einen Impedanzwandler 21 durchläuft. Diese Ausführungsform ist insbesondere dann vorteilhaft, wenn das an der Klemme 8 einlaufende Spannungsignal, welches z.B. die von einem Hüllkurvenformer abgegebene Hüllkurvenspannung sein kann, hochohmig ist.

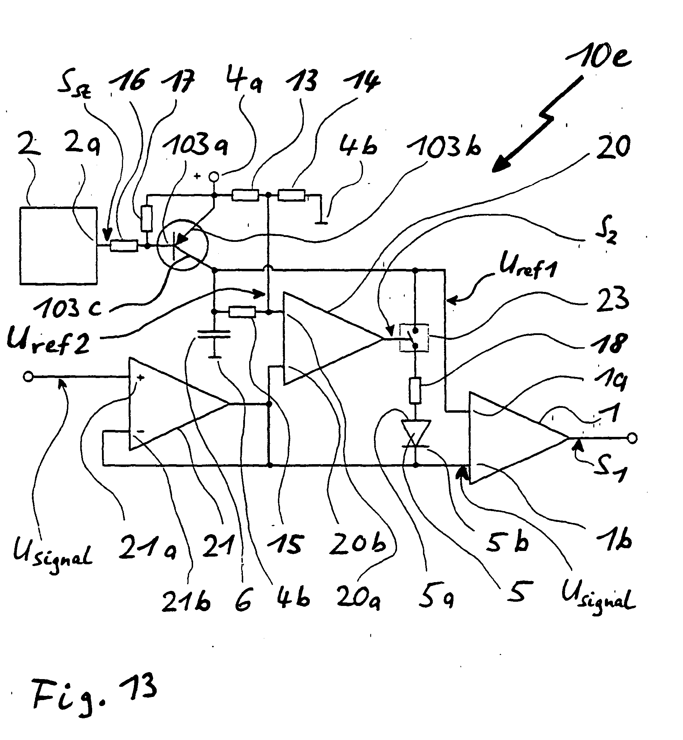

Fig.13 zeigt weitere bevorzugte Ausführungsform 10e der Erfindung, welche sich von der adaptiven Komparatorschaltung 10a von Fig. 6 wie folgt unterscheidet:
a) Der erste Schalter ist ein Transistor 103. Die Basis 103a des Transistors 103 dient als Steueranschluß, der Emitter 103b als Schaltereingang und der Kollektor 103c als Schalterausgang.
b) Es kommt ein zweiter Komparator 20 zum Einsatz, der einen zweiten Schwellenwerteingang 20a und einen zweiten Signaleingang 20b aufweist und ein zweites Schaltsignal S₂ abgibt, wenn am zweiten Signaleingang 20b eine größere Spannung anliegt als am zweiten Schwellenwerteingang 20a.
c) Der erste Pol 4a der ersten Spannungsquelle 4a, 4b ist über einen dritten Widerstand 13 an den zweiten Schwellenwerteingang 20a gelegt. Über einen vierten Widerstand 14 ist der zweite Schwelleneingang 20a mit dem zweiten Pol 4b verbunden, so daß der dritte und der vierte Widerstand 13, 14 einen zweiten Spannungsteiler bilden, welcher als Potentiometer ausgebildet sein kann.
d) Der als Schalterausgang dienende Kollektor 103c und der zweite Schwellenwerteingang 20a sind über einen fünften Widerstand 15 verbunden.
e) Mit der Diode 5 ist ein zweiter Schalter 23 in Serie geschaltet, der durch das zweite Schaltsignal S₂ so steuerbar oder aktivierbar ist, daß er sich in geschlossenem Zustand befindet, wenn der zweite Komparator 20 das zweite Schaltsignal S₂ abgibt, und sich andernfalls in geöffnetem Zustand befindet. Der zweite Schalter 23 kann ein Transistor sein.
f) Zwischen dem Steuerausgang 2a des Signalgebers 2 und der Basis 103a ist ein sechster Widerstand 16 und zwischen der Basis 103a und dem ersten Pol 4a, der im gezeigten Beispiel ein Pluspol ist, ein siebter Widerstand 17 geschaltet. Der Zweck dieser Widerstände wurde bereits oben erläutert.
g) Die Diode 5 ist mit einem achten Widerstand 18 in Serie geschaltet. Der Zweck dieses Widerstandes wurde bereits unter Bezug auf Fig.11 erläutert.
h) Das Spannungssignal durchläuft vor Erreichen des ersten Signaleinganges 1b einen Impedanzwandler 21, dessen Zweck bereits unter Bezug auf Fig. 12 erläutert wurde.

Durch den zweiten Spannungsteiler 13, 14 liegt am zweiten Schwellenwerteingang 20a eine Spannung U_{ref2} an. Solange der zweite Schalter 23 geschlossen ist, folgt die erste Schwellenspannung U_{ref1} dem abfallenden Spannungssignal U_{Signal} um den Grundspannungsabstand dU parallelversetzt, wie oben erläutert. Erfindungsgemäß öffnet jedoch der zweite Schalter 23, sobald das Spannungssignal U_{Signal} die zweite Schwellenspannung U_{ref2} unterschreitet. Dadurch wird die Entladung des Kondensators 6 und damit das Abfallen der ersten Schwellenspannung U_{ref1} beendet.

Somit kann sich in dieser Ausführungsform der Erfindung der Kondensator 6 nur so weit entladen, bis die erste Schwellenspannung U_{ref1} auf die Größe der vom zweiten Potentiometer 13, 14 vorgegebenen Spannung zweiten Schwellenspannung U_{ref2} abgefallen ist.

Mit Hilfe des zweiten Spannungsteilers 13, 14 kann daher der Spannungsabstand, um welchen die erste Schwellenspannung nach Abklingen des Spannungssignals U_{Signal} gegenüber dem Spannungssignal U_{Signal} parallelversetzt ist, vorteilhafterweise vom Grundspannungsabstand dU auf einen Wert dU_{b} vergrößert werden. Der zweite Spannungsteiler 13, 14 kann ein einstellbares Potentiometer sein, dessen Abgriff mit dem zweiten Schwellenwerteingang 20a verbunden ist.

Zwischen dem Schalterausgang 103c und dem zweiten Schwellenwerteingang 20a ist der fünfte Widerstand 15 geschaltet. Die Größe der ersten Schwellenspannung U_{ref1} strebt daher derjenigen Spannung entgegen, die durch den zweiten Spannungsteiler 13, 14 vorgegeben ist. Insbesondere kann mit Hilfe des fünften Widerstandes 15 zusätzlich erreicht werden, daß der Spannungsabstand, um welchen die erste Schwellenspannung U_{ref1} gegenüber dem Spannungssignal U_{Signal} parallelversetzt ist, einem Wert dU_{b} zustrebt, welcher vorteilhafterweise je nach der vom zweiten Spannungsteiler 13, 14 vorgegebenen Spannung U_{ref2} nicht nur größer, sondern auch geringer sein kann als der Grundspannungsabstand dU.

Wenn diese Ausgestaltung 10e einer erfindungsgemäßen adaptiven Komparatorschaltung in einem erfindungsgemäßen akustischen Entfernungssensor zum Einsatz kommt, kann auf diese Weise die Empfindlichkeit des Entfernungssensors, die während der Ruhephase erreicht wird, mit Hilfe des zweiten Spannungsteilers 13,14 wahlweise vergrößert oder verringert werden.

Alle Ausführungsformen, einer erfindungsgemäßen adaptiven Komparatorschaltung und daher auch die in den Fig. 6 und Fig. 11 bis 13 veranschaulichten Ausführungsformen 10b, 10c, 10d, 10e können erfindungsgemäß in dem akustischen Entfernungssensor von Fig. 8 anstelle der dort beispielhaft gezeigten adaptiven Komparatorschaltung 10a eingesetzt werden.

### Gewerbliche Anwendbarkeit:

Die Erfindung ist gewerblich anwendbar z.B. in der Abstandsmeßtechnik, in der Füllstandsmeßtechnik und in der Automatisierungstechnik.

Leitfigur ist Fig. 5.

### Liste der Bezugszeichen:

- 1: erster, Komparator
- 1a: erster Schwellenwerteingang
- 1b: erster Signaleingang
- 2: Signalgeber
- 2a: Steuerausgang von 2
- 2b: Eingang von 2
- 3: erster Schalter
- 3a: Steueranschluß von 3
- 3b: Schaltereingang von 3
- 3c: Schalterausgang von 3
- 4a, 4b: erster, zweiter Pol der ersten Gleichspannungsquelle
- 5: Diode
- 5a, 5b: Anode, Kathode von 5
- 6: Kondensator
- 7: zweite Gleichspannungsquelle
- 7a, 7b: positiver, negativer Pol von 7
- 8,9: erste, zweite Klemme
- 10a,b,c,d,e: adaptive Komparatorschaltungen
- 11-18: erster bis achter Widerstand
- 20: zweiter Komparator
- 20a: zweiter Schwellenwerteingang
- 20b: zweiter Signaleingang
- 21: Spannungsfolger
- 23: zweiter Schalter
- 30a: Entfernungssensor mit konstanter Schwellenspannung
- 30b: Entfernungssensor mit variabler Schwellenspannung
- 31: Steuereinheit
- 32: Oszillator
- 33: Treiber
- 34: Schallwandler
- 35: Spannungsbegrenzer
- 36a: Verstärker mit steuerbarem Verstärkungsfaktor
- 36b, c: logarithmische Verstärker
- 37: Hüllkurvenformer
- 38a: Verstärkungsfaktor-Ansteuerungsstufe
- 38b: Schwellenwert-Steuerungsstufe
- 41: Signalimpulse
- 42: zeitlicher Verlauf des Verstärkungsfaktors von 36a
- 42a: Minimum von 42
- 43,53: zeitliche Verläufe der Hüllkurvenspannung
- 43a,53a,: Abschnitte von 43, 53 während der Signalimpulse 41, 51
- 43b, 53b: Abschnitte von 43, 53 während der Relaxationszeit von 34
- 43c, 53: Abschnitte von 43, 53 während der Ruhephase
- 43d, 53d: Abschnitte von 43, 53 während eines Echos
- 44, 54: Schwellenwerte von 30a, 30b
- 45: Blind-Schaltsignal
- 46, 56: Nutz-Schaltsignale
- 60: erster Echo-Peak
- 61: zweiter Echo-Peak
- 62: dritter Echo-Peak
- 103: Transistor
- 103a: Basis von 103
- 103b: Emitter von 103
- 103c: Kollektor von 103
- S₁ S₁ₐ, S_{1b}: Schaltsignale von 1
- S2: Schaltsignal von 20
- dU: Grundspannungsabstand
- U_{ref1}: erste Schwellenspannung
- U_{Signal}: Spannungssignal

## Patentansprüche

1. Adaptive Komparatorschaltung für einen akustischen Entfernungssensor mit einem ersten Komparator (1), welcher
- einen ersten Schwellenwerteingang (1a), an welchen eine erste Schwellenspannung (U_{ref1}) angelegt ist, und
- einen ersten Signaleingang (1b), an welchen ein Spannungsignal (USignal) angelegt ist,
aufweist und bei Vorliegen eines Spannungssignals (U_{Signal}), welches größer ist als die erste Schwellenspannung (U_{ref1}), ein erstes Schaltsignal (S₁) abgibt, **gekennzeichnet durch**
- einen Signalgeber (2), insbesondere Mikrokontroler oder Mikroprozessor, welcher zeitweise ein Steuersignal (Sₛₜ) abgibt,
- einen ersten Schalter (3, 103), welcher eine Steuereinrichtung (3a, 103a), einen Schaltereingang (3b, 103b) sowie einen Schalterausgang (3c, 103c) aufweist und **durch** Einwirkung des Steuersignals (S_{St}) auf die Steuereinrichtung (3a, 103a) so steuerbar oder aktivierbar ist, daß er sich in geschlossenem Zustand befindet, wenn der Signalgeber (2) ein Steuersignal (S_{St}) abgibt, und sich andernfalls in geöffnetem Zustand befindet, oder umgekehrt, wobei der Schaltereingang (3b, 103b) mit dem positiven ersten Pol (4a) einer ersten Gleichspannungsquelle und der Schalterausgang (3c, 103c) mit dem ersten Schwellenwerteingang (1a) verbunden ist, so daß die erste Schwellenspannung (U_{ref1}) gleich der am Schalterausgang (3c, 103c) anliegenden Spannung ist,
- einen Kondensator (6), über den der Schalterausgang (3c,103c) mit dem negativen zweiten Pol (4b) der ersten Gleichspannungsquelle verbunden ist, und
- eine Diode (5), über welche der Schalterausgang (3c, 103c) mit dem ersten Signaleingang (1b) so verbunden ist, daß die Anode (5a) der Diode (5) mit dem Schalterausgang (3c,103c) verbunden ist,
- so dass die Schwellenspannung (U_{ref1}) um einen Grundspannungsabstand (dU), der dem Spannungsabfall über der Diode (5) entspricht, parallelversetzt zum Spannungssignal (U_{Signal}) über der Zeit verläuft, solange das Spannungssignal (U_{Signal}) nicht ansteigt und die Schwellenspannung (U_{ref1}) konstant bleibt, falls das Spannungssignal (U_{Signal}) ansteigt.

2. Adaptive Komparatorschaltung nach Anspruch 1,
**dadurch gekennzeichnet, daß** anstelle der Diode (5) eine zweite Gleichspannungsquelle (7) verwendet wird, deren positiver Pol (7a) an die Stelle der Anode (5a) der Diode (5) und deren negativer Pol (7b) an die Stelle der Kathode (5b) der Diode (5) tritt.

3. Adaptive Komparatorschaltung nach Anspruch 2,
**dadurch gekennzeichnet, daß** die von der zweiten Spannungsquelle (7) abgegebene Spannung regelbar oder einstellbar ist.

4. Adaptive Komparatorschaltung nach einem der Ansprüche 1 bis 3,
**dadurch gekennzeichnet, daß** der Signalgeber (2) in regelmäßigen Zeitabständen ein Steuersignal (S_{St}) abgibt.

5. Adaptive Komparatorschaltung nach Anspruch 1,
**dadurch gekennzeichnet, daß** der erste Schalter (3, 103) ein über die Steuereinrichtung (3a, 103a) elektrische oder elektronisch steuerbarer Schalter und das Steuersignal (S_{St}) ein elektrisches Signal ist, welches von dem Signalgeber (2) über einen Steuerausgang (2a) abgegeben und dem Steuereingang (3a, 103a) zugeführt wird.

6. Adaptive Komparatorschaltung nach Anspruch 5,
**dadurch gekennzeichnet, daß** der erste Schalter (3, 103) ein Transistor (103) ist und der Steueranschluß (3a, 103a) die Basis (103) oder der Gate-Anschluß des Transistors (103) ist.

7. Adaptive Komparatorschaltung nach einem der Ansprüche 1 bis 6, **dadurch gekennzeichnet,**
**daß** zwischen dem ersten Pol (4a) und dem ersten Schwellenwerteingang (1a) ein erster Widerstand (11) und zwischen dem ersten Schwellenwerteingang (1a) und dem zweiten Pol (4b) ein zweiter Widerstand (12) geschaltet ist, so daß der erste Widerstand (11) und der zweite Widerstand (12) einen ersten Spannungsteiler (11, 12) bilden.

8. Adaptive Komparatorschaltung nach Anspruch 7,
**dadurch gekennzeichnet, daß** der erste Spannungsteiler (11, 12) ein einstellbares Potentiometer ist, dessen Abgriff mit dem Schalterausgang (3c, 103c) verbunden ist.

9. Adaptive Komparatorschaltung nach einem der Ansprüche 1 bis 6, **gekennzeichnet durch**
- einen zweiten Komparator (20), welcher einen zweiten Schwellenwerteingang (20a) und einen zweiten Signaleingang (20b) aufweist und ein zweites Schaltsignal S₂ abgibt, wenn am zweiten Signaleingang (20b) eine größere Spannung anliegt als am zweiten Schwellenwerteingang (20a),
- einen dritten Widerstand (13), über welchen der erste Pol (4a), an den zweiten Schwellenwerteingang (20a) gelegt ist,
- einen vierten Widerstand (14), welcher einerseits mit dem zweiten Schwellenwerteingang (20a) und andererseits mit dem zweiten Pol (4b) der ersten Spannungsquelle verbunden ist, so daß der dritte Widerstand (13) und der vierte Widerstand (14) einen zweiten Spannungsteiler (13, 14) bilden,
- einen zweiten Schalter (23), welcher mit der Diode (5) in Serie geschaltet und **durch** das zweite Schaltsignal S₂ so steuerbar oder aktivierbar ist, daß er sich in geschlossenem Zustand befindet, wenn der zweite Komparator (20) das zweite Schaltsignal S₂ abgibt, und sich andernfalls in geöffnetem Zustand befindet.

10. Adaptive Komparatorschaltung nach Anspruch 9, **dadurch gekennzeichnet, daß**
zwischen dem Schalterausgang (3c, 103c) und dem zweiten Schwellenwerteingang (20a) ein fünfter Widerstand (15) zwischen dem Schalterausgang (3c, 103c) und dem zweiten Schwellenwerteingang (20a) geschaltet ist.

11. Adaptive Komparatorschaltung nach Anspruch 9 oder 10, **dadurch gekennzeichnet,**
**daß** der zweite Spannungsteiler (13, 14) ein Potentiometer ist.

12. Adaptive Komparatorschaltung nach einem der Ansprüche Anspruch 1 bis 11, **dadurch gekennzeichnet,**
**daß** zwischen dem Steuerausgang (2a) und dem Steueranschluß (3a, 103a) ein sechster Widerstand (16) geschaltet ist.

13. Adaptive Komparatorschaltung nach Anspruch 6,
**dadurch gekennzeichnet, daß** zwischen dem Steueranschluß (3a, 103a) und dem ersten Pol (4a) ein siebter Widerstand (17) geschaltet ist.

14. Adaptive Komparatorschaltung nach einem der Ansprüche 1 bis 13,
**dadurch gekennzeichnet, daß** die Diode (5) bzw. die zweite Spannungsquelle (7) mit einem achten Widerstand (18) in Serie geschaltet ist.

15. Adaptive Komparatorschaltung nach einem der Ansprüche 1 bis 14,
**dadurch gekennzeichnet, daß** das Spannungssignal (U_{Signal}) vor Erreichen des ersten Signaleinganges (1b) einen Spannungsfolger oder Impedanzwandler (21) durchläuft.

16. Adaptive Komparatorschaltung nach einem der Ansprüche 1 bis 15, **dadurch gekennzeichnet,**
**daß** die von der ersten Spannungsquelle (4a, 4b), gelieferte Spannung betragsmäßig größer ist als der Betrag des Maximums des Spannungsignals (U_{Signal}).

17. Adaptive Komparatorschaltung nach Anspruch 1,
**dadurch gekennzeichnet, daß** die Diode (5) mit mindestens einer weiteren Diode gleichsinnig in Serie geschaltet ist.

18. Akustischer Entfernungssensor, umfassend eine Steuereinheit (31), welche zeitweise Signalimpulse (41) an einen Oszillator (32) abgibt, welcher während des Anliegens eines Signalimpulses (41) eine Wechselspannnung an einen Schallwandler (34) abgibt, welcher durch diese zur Abstrahlung von Schallwellen angeregt wird und imstande ist, aufgrund von Reflexion zum Schallwandler (34) zurückkommende Schallwellen als Echo zu empfangen und in ein elektrisches Empfangssignal umzusetzen, sowie einen Hüllkurvenformer (37), welchem das Empfangssignal zugeführt wird und welcher die Hüllkurve des Empangssignals bildet und diese als Signalspannung U_{Signal} ausgibt, **dadurch gekennzeichnet, daß** die Signalspannung einer adaptiven Komparatorschaltung zugeführt wird, umfassend
- einen ersten Komparator (1), der einen ersten Schwellenwerteingang (1a), an welchen eine erste Schwellenspannung (U_{ref1}) angelegt ist, und einen ersten Signaleingang (1b), an welchen ein Spannungsignal (U_{Signal}) angelegt ist, aufweist und der bei Vorliegen eines Spannungssignals (U_{Signal}), welches größer ist als die erste Schwellenspannung (U_{ref1}), ein erstes Schaltsignal (S₁) abgibt,
- einen Signalgeber (2), insbesondere Mikrokontroler oder Mikroprozessor, welcher zeitweise ein Steuersignal (Sₛₜ) abgibt,
- einen ersten Schalter (3, 103), welcher eine Steuereinrichtung (3a, 103a), einen Schaltereingang (3b, 103b) sowie einen Schalterausgang (3c, 103c) aufweist und durch Einwirkung des Steuersignals (S_{St}) auf die Steuereinrichtung (3a, 103a) so steuerbar oder aktivierbar ist, daß er sich in geschlossenem Zustand befindet, wenn der Signalgeber (2) ein Steuersignal (S_{St}) abgibt, und sich andernfalls in geöffnetem Zustand befindet, oder umgekehrt, wobei der Schaltereingang (3b, 103b) mit dem positiven ersten Pol (4a) einer ersten Gleichspanriungsquelle und der Schalterausgang (3c, 103c) mit dem ersten Schwellenwerteingang (1a) verbunden ist, so daß die erste Schwellenspannung (U_{ref1}) gleich der am Schälterausgang (3c, 103c) anliegenden Spannung ist,
- einen Kondensator (6), über den der Schalterausgang (3c,103c) mit dem negativen zweiten Pol (4b) der ersten Gleichspannungsquelle verbunden ist, und
- eine Diode (5), über welche der Schalterausgang (3c, 103c) mit dem ersten Signaleingang (1b) so verbunden ist, daß die Anode (5a) der Diode (5) mit dem Schalterausgang (3c,103c) verbunden ist,
- so dass die Schwellenspannung (U_{ref1}) um einen Grundspannungsabstand (dU), der dem Spannungsabfall über der Diode (5) entspricht, parallelversetzt zum Spannungssignal (U_{Signal}) über der Zeit verläuft, solange das Spannungssignal (U_{Signal}) nicht ansteigt und die Schwellenspannung (U_{ref1}) konstant bleibt, falls das Spannungssignal (U_{Signal}) ansteigt.

19. Akustischer Entfernungssensor nach Anspruch 18,
**dadurch gekennzeichnet, daß** anstelle der Diode (5) eine zweite Gleichspannungsquelle (7) verwendet wird, deren positiver Pol (7a) an die Stelle der Anode (5a) der Diode (5) und deren negativer Pol (7b) an die Stelle der Kathode (5b) der Diode (5) tritt.

20. Akustischer Entfernungssensor nach Anspruch 18 oder 19,
**dadurch gekennzeichnet, daß** die von dem Oszillator (32) abgegebene Wechselspannung den Schallwandler (34) nach Durchlaufen einer Treiberstufe (33) erreicht.

21. Akustischer Entfernungssensor nach einem der Ansprüche 18 bis 20,
**dadurch gekennzeichnet, daß** das Empfangssignal vor Eintritt in den Hüllkurvenformer (37) einen Verstärker (36c) durchläuft.

22. Akustischer Entfernungssensor nach Anspruch 21,
**dadurch gekennzeichnet, daß** der Verstärker (36c) ein logarithmischer Verstärker ist.

23. Akustischer Entfernungssensor nach einem der Ansprüche 18 bis 22,
**dadurch gekennzeichnet, daß** das Empfangssignal vor Eintritt in den Hüllkurvenformer (37) einen Spannungsbegrenzer (35) durchläuft, welcher die Amplitude des Empfangssignals auf einen Maximalwert begrenzt.

24. Akustischer Entfernungssensor nach einem der Ansprüche 18-23,
**dadurch gekennzeichnet, daß** der Signalgeber (2) in die Steuereinheit (31) integriert ist oder Bestandteil der Steuereinheit (31) ist.

25. Akustischer Entfernungssensor nach einem der Ansprüche 18-24,
**dadurch gekennzeichnet, daß** das erste Schaltsignal (S₁) der Steuereinheit (31) zur Auswertung zugeführt wird.

26. Akustischer Entfernungssensor nach einem der Ansprüche 18-25,
**dadurch gekennzeichnet, daß** die Signalimpulse (41) mit den Steuersignalen (Sₛₜ) so synchronisiert sind, daß die Steuersignale (Sₛₜ) jeweils vor den Signalimpulsen (41) beginnen.

27. Akustischer Entfernungssensor nach einem der Ansprüche 18-26,
**dadurch gekennzeichnet, daß** die Signalimpulse 41 mit den Steuersignalen Sₛₜ so synchronisiert sind, daß die Steuersignale S_{St} jeweils vor oder gleichzeitig mit dem Ende der Signalimpulse 41 beendet werden.

## Claims

1. An adaptive comparator circuit for an acoustic distance sensor comprising a first comparator (1) which has
- a first threshold value input (1 a) to which a first threshold voltage (U_{ref1}) is applied, and
- a first signal input (1b) to which a voltage signal (U_{signal}) is applied,
and, when a voltage signal (U_{signal}) is present that is greater than the first threshold voltage (U_{ref1}), said circuit emits a first switching signal (S₁), **characterized by**
- a signal generator (2), especially a microcontroller or microprocessor, that intermittently emits a control signal (S_{St}),
- a first switch (3, 103) that has a control element (3a, 103a), a switch input (3b, 103b) as well as a switch output (3c, 103c) and, through the effect of the control signal (S_{St}) on the control element (3a, 103a), can be controlled or activated in such a way that it is in the closed state when the signal generator (2) emits a control signal (Sₛₜ), and otherwise it is in the open state or vice versa, whereby the switch input (3b, 103b) is connected to the positive first pole (4a) of a first source of direct voltage and the switch output (3c, 103c) is connected to the first threshold value input (1a), so that the first threshold voltage (U_{ref1}) is equal to the voltage present at the switch output (3c, 103c),
- a capacitor (6) via which the switch output (3c, 103c) is connected to the negative second pole (4b) of the first source of direct voltage, and
- a diode (5) via which the switch output (3c, 103c) is connected to the first signal input (1 b) in such a way that the anode (5a) of the diode (5) is connected to the switch output (3c, 103c), so that the threshold voltage (U_{ref1}) runs parallel-offset to the voltage signal (U_{signal}) over time by a basic voltage distance (dU) that corresponds to the voltage drop via the diode (5), as long as the voltage signal (U_{signal}) does not rise, and the threshold voltage (U_{ref1}) remains constant if the voltage signal (U_{signal}) rises.

2. The adaptive comparator circuit according to Claim 1,
**characterized in that**, instead of the diode (5), a second source of direct voltage (7) is used whose positive pole (7a) replaces the anode (5a) of the diode (5) and whose negative pole (7b) replaces the cathode (5b) of the diode (5).

3. The adaptive comparator circuit according to Claim 2,
**characterized in that** the voltage supplied by the second source of voltage (7) can be regulated or set.

4. The adaptive comparator circuit according to any of Claims 1 to 3,
**characterized in that** the signal generator (2) emits a control signal (S_{St}) at regular time intervals.

5. The adaptive comparator circuit according to Claim 1,
**characterized in that** the first switch (3, 103) is a switch that can be electrically or electronically controlled by means of the control element (3a, 103a), and the control signal (Sₛₜ) is an electric signal that is emitted by the signal generator (2) via a control output (2a) and that is fed to the control input (3a, 103a).

6. The adaptive comparator circuit according to Claim 5,
**characterized in that** the first switch (3, 103) is a transistor (103) and the control terminal (3a, 103a) is the base (103) or the gate connection of the transistor (103).

7. The adaptive comparator circuit according to any of Claims 1 to 6,
**characterized in that** a first resistor (11) is connected between the first pole (4a) and the first threshold value input (1 a), and a second resistor (12) is connected between the first threshold value input (1a) and the second pole (4b), so that the first resistor (11) and the second resistor (12) form a first voltage divider (11, 12).

8. The adaptive comparator circuit according to Claim 7,
**characterized in that** the first voltage divider (11, 12) is an adjustable potentiometer whose tap is connected to the switch output (3c, 103c).

9. The adaptive comparator circuit according to any of Claims 1 to 6,
**characterized by**
- a second comparator (20) that has a second threshold value input (20a) and a second signal input (20b) and that emits a second switching signal S₂ when a higher voltage is present at the second signal input (20b) than at the second threshold value input (20a),
- a third resistor (13) via which the first pole (4a) is connected to the second threshold value input (20a),
- a fourth resistor (14) that is connected, on the one hand, to the second threshold value input (20a) and, on the other hand, to the second pole (4b) of the first voltage source, so that the third resistor (13) and the fourth resistor (14) form a second voltage divider (13, 14),
- a second switch (23) that is series-connected to the diode (5) and that can be controlled or activated by the second switching signal S₂ in such a way that it is in the closed state when the second comparator (20) emits the second switching signal S₂ and that is otherwise in the open state.

10. The adaptive comparator circuit according to Claim 9,
**characterized in that** a fifth resistor (15) is connected between the switch output (3c, 103c) and the second threshold value input (20a).

11. The adaptive comparator circuit according to Claim 9 or 10,
**characterized in that** the second voltage divider (13, 14) is a potentiometer.

12. The adaptive comparator circuit according to any of Claims 1 to 11,
**characterized in that** a sixth resistor (16) is connected between the control output (2a) and the control terminal (3a, 103a).

13. The adaptive comparator circuit according to Claim 6,
**characterized in that** a seventh resistor (17) is connected between the control terminal (3a, 103a) and the first pole (4a).

14. The adaptive comparator circuit according to any of Claims 1 to 13,
**characterized in that** the diode (5) or the second voltage source (7) is series-connected to an eighth resistor (18).

15. The adaptive comparator circuit according to any of Claims 1 to 14,
**characterized in that**, before reaching the first signal input (1 b), the voltage signal (U_{Signal}) passes through a voltage follower or impedance transformer (21).

16. The adaptive comparator circuit according to any of Claims 1 to 15,
**characterized in that** the voltage supplied by the first voltage source (4a, 4b) is greater in magnitude than the value of the maximum of the voltage signal (U_{signal}).

17. The adaptive comparator circuit according to Claim 1,
**characterized in that** the diode (5) is co-directionally series-connected to at least one additional diode.

18. An acoustic distance sensor, comprising a control unit (31) that intermittently emits signal pulses (41) to an oscillator (32) that, during the presence of a signal pulse (41), supplies an alternating voltage to an electroacoustic transducer (34) that is excited by said alternating voltage to irradiate sound waves and that is capable of receiving sound waves that return to the electroacoustic transducer (34) as an echo due to reflection and that is capable of converting them into an electric received signal, and also comprising an envelope-curve transducer (37) to which the received signal is fed and which forms the envelope curve of the received signal and emits this as the voltage signal (U_{signal}), **characterized in that** the signal voltage is fed to an adaptive comparator circuit, comprising
- a first comparator (1) which has a first threshold value input (1a) to which a first threshold voltage (U_{ref1}) is applied, and a first signal input (1b) to which a voltage signal (U_{signal}) is applied, and, when a voltage signal (U_{signal}) is present that is greater than the first threshold voltage (U_{ref1}), said circuit emits a first switching signal (S₁),
- a signal generator (2), especially a microcontroller or microprocessor, that intermittently emits a control signal (S_{St}),
- a first switch (3, 103) that has a control element (3a, 103a), a switch input (3b, 103b) as well as a switch output (3c, 103c) and, through the effect of the control signal (S_{St}) on the control element (3a, 103a), can be controlled or activated in such a way that it is in the closed state when the signal generator (2) emits a control signal (Sₛₜ), and otherwise it is in the open state or vice versa, whereby the switch input (3b, 103b) is connected to the positive first pole (4a) of a first source of direct voltage and the switch output (3c, 103c) is connected to the first threshold value input (1a), so that the first threshold voltage (U_{ref1}) is equal to the voltage present at the switch output (3c, 103c),
- a capacitor (6) via which the switch output (3c, 103c) is connected to the negative second pole (4b) of the first source of direct voltage, and
- a diode (5) via which the switch output (3c, 103c) is connected to the first signal input (1 b) in such a way that the anode (5a) of the diode (5) is connected to the switch output (3c, 103c), so that the threshold voltage (U_{ref1}) runs parallel-offset to the voltage signal (U_{signal}) over time by a basic voltage distance (dU) that corresponds to the voltage drop via the diode (5), as long as the voltage signal (U_{signal}) does not rise, and the threshold voltage (U_{ref1}) remains constant if the voltage signal (U_{signal}) rises.

19. The acoustic distance sensor according to Claim 18,
**characterized in that**, instead of the diode (5), a second source of direct voltage (7) is used whose positive pole (7a) replaces the anode (5a) of the diode (5) and whose negative pole (7b) replaces the cathode (5b) of the diode (5).

20. The acoustic distance sensor according to Claim 18 or 19,
**characterized in that** the alternating voltage supplied by the oscillator (32) reaches the electroacoustic transducer (34) after passing through a driver stage (33).

21. The acoustic distance sensor according to any of Claims 18 to 20,
**characterized in that** the received signal passes through an amplifier (36c) before entering the envelope-curve transducer (37).

22. The acoustic distance sensor according to Claim 21,
**characterized in that** the amplifier (36c) is a logarithmic amplifier.

23. The acoustic distance sensor according to any of Claims 18 to 22,
**characterized in that**, before entering the envelope-curve transducer (37), the received signal passes through a voltage limiter (35) that limits the amplitude of the received signal to a maximum value.

24. The acoustic distance sensor according to any of Claims 18 to 23,
**characterized in that** the signal generator (2) is integrated into the control unit (31) or is a component of the control unit (31).

25. The acoustic distance sensor according to any of Claims 18 to 24,
**characterized in that** the first switching signal (S₁) is transmitted to the control unit (31) for purposes of evaluation.

26. The acoustic distance sensor according to any of Claims 18 to 25,
**characterized in that** the signal pulses (41) are synchronized with the control signals (Sₛₜ) in such a way that the control signals (S_{St}) each start before the signal pulses (41).

27. The acoustic distance sensor according to any of Claims 18 to 26,
**characterized in that** the signal pulses (41) are synchronized with the control signals (S_{St}) in such a way that the control signals (S_{St}) each end before or concurrently with the end of the signal pulses (41).

## Revendications

1. Montage comparateur adaptatif pour un capteur de distance acoustique comportant un premier comparateur (1), lequel présente
- une première entrée de valeur de seuil (1a) à laquelle est appliquée une première tension de seuil (U_{ref1}), et
- une première entrée de signal (1 b) à laquelle est appliqué un signal de tension (U_{signal}),
et, en présence d'un signal de tension (U_{signal}), lequel est plus élevé que la première tension de seuil (U_{ref1}), émet un premier signal de commutation (S₁),
**caractérisé par**
- un émetteur de signaux (2), en particulier un microcontrôleur ou un microprocesseur, lequel émet temporairement un signal de commande (S_{St}),
- un premier interrupteur (3, 103), lequel présente un dispositif de commande (3a, 103a), une entrée d'interrupteur (3b, 103b), ainsi qu'une sortie d'interrupteur (3c, 103c), et, par l'action du signal de commande (S_{St}) sur le dispositif de commande (3a, 103a), peut être commandé ou activé de sorte qu'il se trouve à l'état fermé lorsque l'émetteur de signaux (2) émet un signal de commande (S_{St}), et se trouve autrement à l'état ouvert, ou vice versa, l'entrée d'interrupteur (3b, 103b) étant reliée au premier pôle positif (4a) d'une première source de tension continue, et la sortie d'interrupteur (3c, 103c) à la première entrée de valeur de seuil (1a), de sorte que la première tension de seuil (U_{ref1}) est égale à la tension appliquée à la sortie d'interrupteur (3c, 103c),
- un condensateur (6) via lequel la sortie d'interrupteur (3c, 103c) est reliée au deuxième pôle négatif (4b) de la première source de tension continue, et
- une diode (5), via laquelle la sortie d'interrupteur (3c, 103c) est reliée à la première entrée de signal (1 b), de sorte que l'anode (5a) de la diode (5) est reliée à la sortie d'interrupteur (3c, 103c), de sorte que la tension de seuil (U_{ref1}) présente une allure dans le temps décalée en parallèle par rapport au signal de tension (U_{Signal}) d'un écart de tension de base (dU), lequel correspond à la chute de tension produite par la diode (5), tant que le signal de tension (U_{signal}) n'augmente pas et que la tension de seuil (U_{ref1}) reste constante au cas où le signal de tension (U_{signal}) augmente.

2. Montage comparateur adaptatif selon la revendication 1,
**caractérisé en ce que** au lieu de la diode (5), une deuxième source de tension continue (7) est utilisée, dont le pôle positif (7a) remplace l'anode (5a) de la diode (5) et dont le pôle négatif (7b) remplace la cathode (5b) de la diode (5).

3. Montage comparateur adaptatif selon la revendication 2,
**caractérisé en ce que** la tension émise par la deuxième source de tension (7) est réglable ou ajustable.

4. Montage comparateur adaptatif selon l'une des revendications 1 à 3,
**caractérisé en ce que** l'émetteur de signaux (2) émet un signal de commande (S_{St}) à des intervalles de temps réguliers.

5. Montage comparateur adaptatif selon la revendication 1,
**caractérisé en ce que** le premier interrupteur (3, 103) est un interrupteur commandé électriquement ou électroniquement via le dispositif de commande (3a, 103a) et le signal de commande (S_{St}) est un signal électrique, lequel est émis par l'émetteur de signaux (2) via une sortie de commande (2a) et est transmis à l'entrée de commande (3a, 103a).

6. Montage comparateur adaptatif selon la revendication 5,
**caractérisé en ce que** le premier interrupteur (3, 103) est un transistor (103) et la jonction de commande (3a, 103a) est la base (103) ou le contact de grille du transistor (103).

7. Montage comparateur adaptatif selon l'une des revendications 1 à 6,
**caractérisé en ce que** une première résistance (11) est couplée entre le premier pôle (4a) et la première entrée de valeur de seuil (1a) et une deuxième résistance (12) entre la première entrée de valeur de seuil (1a) et le deuxième pôle (4b), de sorte que la première résistance (11) et la deuxième résistance (12) forment un premier diviseur de tension (11, 12).

8. Montage comparateur adaptatif selon la revendication 7,
**caractérisé en ce que** le premier diviseur de tension (11, 12) est un potentiomètre réglable dont la prise pour la mesure est reliée à la sortie de l'interrupteur (3c, 103c).

9. Montage comparateur adaptatif selon l'une des revendications 1 à 6,
**caractérisé par**
- un deuxième comparateur (20), lequel présente une deuxième entrée de valeur de seuil (20a) et une deuxième entrée de signal (20b) et émet un deuxième signal de commutation S₂ lorsque la tension appliquée à la deuxième entrée de signal (20b) est plus élevée que celle de la deuxième entrée de valeur de seuil (20a),
- une troisième résistance (13), via laquelle le premier pôle (4a) est relié à la deuxième entrée de valeur de seuil (20a),
- une quatrième résistance (14), laquelle est reliée d'une part à la deuxième entrée de valeur de seuil (20a) et d'autre part au deuxième pôle (4b) de la première source de tension, de sorte que la troisième résistance (13) et la quatrième résistance (14) forment un deuxième diviseur de tension (13, 14),
- un deuxième interrupteur (23), lequel est couplé en série avec la diode (5) et peut être commandé ou activé par le deuxième signal de commutation (S₂) de sorte qu'il se trouve à l'état fermé lorsque le deuxième comparateur (20) émet le deuxième signal de commutation (S₂) et, autrement, se trouve à l'état ouvert.

10. Montage comparateur adaptatif selon la revendication 9,
**caractérisé en ce que** une cinquième résistance (15) est couplée entre la sortie d'interrupteur (3c, 103c) et la deuxième entrée de valeur de seuil (20a).

11. Montage comparateur adaptatif selon la revendication 9 ou 10,
**caractérisé en ce que** le deuxième diviseur de tension (13, 14) est un potentiomètre.

12. Montage comparateur adaptatif selon l'une des revendications 1 à 11,
**caractérisé en ce que** une sixième résistance (16) est couplée entre la sortie de commande (2a) et la jonction de commande (3a, 103a).

13. Montage comparateur adaptatif selon la revendication 6,
**caractérisé en ce que** une septième résistance (17) est couplée entre la jonction de commande (3a, 103a) et le premier pôle (4a).

14. Montage comparateur adaptatif selon l'une des revendications 1 à 13,
**caractérisé en ce que** la diode (5) ou la deuxième source de tension (7) est couplée en série avec une huitième résistance (18).

15. Montage comparateur adaptatif selon l'une des revendications 1 à 14,
**caractérisé en ce que** le signal de tension (U_{Signal}) passe par un étage suiveur ou un convertisseur d'impédance (21) avant d'atteindre la première entrée de signal (1b).

16. Montage comparateur adaptatif selon l'une des revendications 1 à 15,
**caractérisé en ce que** la tension fournie par la première source de tension (4a, 4b) est plus élevée en terme de valeur que la valeur du maximum du signal de tension (U_{signal}).

17. Montage comparateur adaptatif selon la revendication 1,
**caractérisé en ce que** la diode (5) est couplée en série dans le même sens avec au moins une autre diode.

18. Capteur de distance acoustique comportant une unité de commande (31), laquelle émet temporairement des impulsions de signal (41) à un oscillateur (32), lequel, pendant l'application d'une impulsion de signal (41), émet une tension alternative à un transducteur acoustique (34), lequel reçoit par celle-ci une excitation afin d'émettre des ondes sonores et est en mesure de recevoir en écho les ondes sonores qui reviennent au transducteur acoustique (34) en raison de la réflexion et de les transformer en un signal de réception électrique, comportant aussi un générateur d'enveloppe (37) auquel le signal de réception est transmis et lequel forme l'enveloppe du signal de réception et émet celle-ci en tant que tension de signal U_{signal} **caractérisé en ce que** la tension de signal est transmise à un montage comparateur adaptatif comportant
- un premier comparateur (1), lequel présente une première entrée de valeur de seuil (1a) à laquelle est appliquée une première tension de seuil (U_{ref1}), et une première entrée de signal (1b) à laquelle est appliqué un signal de tension (U_{Signal}), et lequel en présence d'un signal de tension (U_{Signal}), lequel est plus élevé que la première tension de seuil (U_{ref1}), émet un premier signal de commutation (S₁),
- un émetteur de signaux (2), en particulier un microcontrôleur ou un microprocesseur, lequel émet temporairement un signal de commande (S_{St}),
- un premier interrupteur (3, 103), lequel présente un dispositif de commande (3a, 103a), une entrée d'interrupteur (3b, 103b), ainsi qu'une sortie d'interrupteur (3c, 103c), et, par l'action du signal de commande (S_{St}) sur le dispositif de commande (3a, 103a), peut être commandé ou activé de sorte qu'il se trouve à l'état fermé lorsque l'émetteur de signaux (2) émet un signal de commande (S_{St}), et qu'il se trouve autrement à l'état ouvert, ou vice versa, l'entrée d'interrupteur (3b, 103b) étant reliée au premier pôle positif (4a) d'une première source de tension continue, et la sortie d'interrupteur (3c, 103c) à la première entrée de valeur de seuil (1a), de sorte que la première tension de seuil (U_{ref1}) est égale à la tension appliquée à la sortie d'interrupteur (3c, 103c),
- un condensateur (6) via lequel la sortie d'interrupteur (3c, 103c) est reliée au deuxième pôle négatif (4b) de la première source de tension continue, et
- une diode (5), via laquelle la sortie d'interrupteur (3c, 103c) est reliée à la première entrée de signal (1 b) de sorte que l'anode (5a) de la diode (5) est reliée à la sortie d'interrupteur (3c, 103c), de sorte que la tension de seuil (U_{ref1}) présente une allure dans le temps décalée en parallèle par rapport au signal de tension (U_{signal}) d'un écart de tension de base (dU), lequel correspond à la chute de tension produite par la diode (5), tant que le signal de tension (U_{signal}) n'augmente pas et que la tension de seuil (U_{ref1}) reste constante au cas où le signal de tension (U_{signal}) augmente.

19. Capteur de distance acoustique selon la revendication 18,
**caractérisé en ce que** au lieu de la diode (5), une deuxième source de tension continue (7) est utilisée, dont le pôle positif (7a) remplace l'anode (5a) de la diode (5) et dont le pôle négatif (7b) remplace la cathode (5b) de la diode (5).

20. Capteur de distance acoustique selon la revendication 18 ou 19,
**caractérisé en ce que** la tension alternative émise par l'oscillateur (32) atteint le transducteur acoustique (34) après être passée par un étage excitateur (33).

21. Capteur de distance acoustique selon l'une des revendications 18 à 20,
**caractérisé en ce que** le signal de réception passe par un amplificateur (36c) avant l'entrée dans le générateur d'enveloppe (37).

22. Capteur de distance acoustique selon la revendication 21,
**caractérisé en ce que** l'amplificateur (36c) est un amplificateur logarithmique.

23. Capteur de distance acoustique selon l'une des revendications 18 à 22,
**caractérisé en ce que** le signal de réception passe, avant l'entrée dans le générateur d'enveloppe (37), par un limiteur de tension (35), lequel limite l'amplitude du signal de réception à une valeur maximale.

24. Capteur de distance acoustique selon l'une des revendications 18 à 23,
**caractérisé en ce que** l'émetteur de signaux (2) est intégré à l'unité de commande (31) ou est un composant de l'unité de commande (31).

25. Capteur de distance acoustique selon l'une des revendications 18 à 24,
**caractérisé en ce que** le premier signal de commutation (S₁) est transmis à l'unité de commande (31) à des fins d'évaluation.

26. Capteur de distance acoustique selon l'une des revendications 18 à 25,
**caractérisé en ce que** les impulsions de signal (41) sont synchronisées avec les signaux de commande (S_{St}), de sorte que les signaux de commande (S_{St}) débutent respectivement avant les impulsions de signal (41).

27. Capteur de distance acoustique selon l'une des revendications 18 à 26,
**caractérisé en ce que** les impulsions de signal (41) sont synchronisées avec les signaux de commande (S_{St}), de sorte que les signaux de commande (S_{St}) se terminent respectivement avant ou en même temps que la fin des impulsions de signal (41).
